# EUROPÄISCHE PATENTSCHRIFT

(11) **EP 0 971 001 B1**
(45) Veröffentlichungstag und Bekanntmachung des Hinweises auf die Patenterteilung: **02.01.2002**
(21) Anmeldenummer: 99112501.4
(22) Anmeldetag: 01.07.1999
(51) Int. Cl.: C09B 48/00, C09B 67/52, C09B 67/22, C09B 67/10

(54) **Verfahren zur Herstellung von Chinacridonpigmenten**
Process for the manufacture of quinacridone pigments
Procédé de fabrication de pigments de quinacridone

(30) Priorität: 10.07.1998 DE 19831097
(43) Veröffentlichungstag der Anmeldung: 12.01.2000
(73) Patentinhaber: Clariant GmbH, 65929 Frankfurt am Main (DE)
(72) Erfinder: Urban, Manfred, 65205 Wiesbaden (DE); Böhmer, Martin, 61267 Neu-Anspach (DE); Schnaitmann, Dieter, Dr., 65817 Eppstein (DE); Weber, Joachim, Dr., 65929 Frankfurt (DE)

(56) Entgegenhaltungen:
- EP-A- 0 799 862
- EP-A- 0 799 863
- EP-A- 0 863 186
- US-A- 4 100 162
- DATABASE WPI Section Ch, Week 197821 Derwent Publications Ltd., London, GB; Class E23, AN 1978-37167A XP002118656 & JP 53 039324 A (TOYO SODA KK), 11. April 1978 (1978-04-11)
- PATENT ABSTRACTS OF JAPAN vol. 199, no. 708, 29. August 1997 (1997-08-29) & JP 09 110867 A (DAINIPPON INK &CHEM INC), 28. April 1997 (1997-04-28)

## Beschreibung

Gegenstand der vorliegenden Erfindung ist ein besonders umweltfreundliches und wirtschaftliches Verfahren zur Herstellung von linearen, substituierten und unsubstituierten Chinacridonpigmenten sowie Mischungen, Mischkristalle und Pigmentzubereitungen auf Basis dieser Pigmente.

Chinacridonpigmente sind seit langem bekannt und haben zum Pigmentieren von Lacken und Kunststoffen große industrielle Bedeutung erlangt. In der Praxis werden daher hohe Anforderungen an ihre Echtheiten und coloristischen Eigenschaften gestellt. Deshalb kommt dem Herstellungs- und Feinverteilungsprozeß große Bedeutung zu. Für die Herstellung von Chinacridonpigmenten gibt es zwei bevorzugte Synthesewege. In technischem Maßstab erfolgt ihre Herstellung durch Oxidation von Dihydrochinacridonen in alkalischem Medium in Gegenwart von Lösemitteln und anschließender Trocken- oder Naßmahlung der erhaltenen grobkristallinen Rohpigmente oder durch Ringschluß von 2,5-Dianilinoterephthalsäuren in Polyphosphorsäure oder Polyphosphorsäureester und anschließendem Finish der erhaltenen feinteiligen Rohpigmente mit organischen Lösemitteln.

Je nach Syntheseweg fallen dabei die Rohpigmente entweder in feinteiliger oder in grobkristalliner Form an. Die feinteilig anfallenden Rohpigmente brauchen nicht mehr feinverteilt zu werden, während die grobkristallin anfallenden Rohpigmente vor einer eventuellen Finishbehandlung feinverteilt werden müssen. Solche Feinverteilungs- und Finishverfahren sind z.B. Acidpasting-, Trockenmahl- und Naßmahlverfahren. Auch Kombinationen dieser Verfahren werden beschrieben.

Die Herstellung von Chinacridonpigmenten, -mischkristallpigmenten und -pigmentzubereitungen ist in den nachfolgend aufgeführten Patentschriften beschrieben:

Die DE-C-1 261 106 beschreibt ein Verfahren zur Verbesserung der Pigmenteigenschaften linearer, substituierter Chinacridone durch Ringschluß der substituierten Dianilinoterephthalsäuren in Polyphosphorsäure und anschließendem Lösemittelfinish der nach der Hydrolyse erhaltenen feuchten feinteiligen Rohpigmente bei erhöhter Temperatur unter Druck. Hierbei werden große Mengen Lösemittel eingesetzt, die wieder aufbereitet werden müssen und die das Verfahren verteuern.

Die Japanische Offenlegungsschrift JP-OS 9-110 867 beschreibt die Herstellung von unsubstituierten und substituierten Chinacridonpigmenten durch langsame Zugabe von 50-95 %iger Phosphorsäure zur Polyphosphorsäureringschlußschmelze bei 140 bis 170 °C bis zur Endkonzentration von 90 bis 95 %iger Phosphorsäure. Die erhaltenen grobkristallinen Rohpigmente müssen anschließend durch Feinverteilung und Finish in Pigmentform überführt werden. Durch diese zusätzlichen Verfahrensschritte wird das Verfahren verteuert.

Die EP-A-0 799 862 beschreibt ein Verfahren zur Herstellung von substituierten und unsubstituierten Chinacridonpigmenten durch Hochtemperaturhydrolyse der Chinacridonringschlußgemische bei über 110 °C in Wasser oder verdünnter wäßriger Phosphorsäure bis zu einer Phosphorsäureendkonzentration von kleiner als 50 %. Die unsubstituierten Chinacridone werden nach dieser Arbeitsweise in der β-Phase erhalten.

Vom linearen, unsubstituierten Chinacridon sind mehrere polymorphe Phasen bekannt. Beschrieben sind die α-Phase (US-PS 2 844 484), die β-Phase (US-PS 2 844 485), die γ-Phase (US-PS 2 844 581), die δ-Phase (US-PS 3 272 821), die ε-Phase (JP-PS 69-22 420) und die ζ-Phase (DE-OS 2 435 219).

Vom γ-Chinacridon werden drei Phasen beschrieben. Die γI-Phase wird in der US-PS 3 074 950 und in der EP-A-0 267 877 beschrieben. Sie zeigt im Röntgenspektrum drei starke Linien beim doppelten Glanzwinkel 2 θ bei 6,6°, 13,9° und 26,5°, drei mittlere Linien bei 13,2 °, 13,5 ° und 23,8 ° und vier schwache Linien bei 17,1 °, 20,5 °, 25,2 ° und 28,6 °. Die γII-Phase wird in der

US-PS 2 844 581 und in der EP-A-0 267 877 und in der DE-A-1 184 881 beschrieben. Sie zeigt im Röntgenspektrum drei starke Linien beim doppelten Glanzwinkel 2 θ bei 6,6°, 13,9° und 26,3°; fünf mittlere Linien bei 13,2 °, 13,4 °, 23,6 °, 25,2 ° und 28,3 ° und zwei schwache Linien bei 17,1 ° und 20,4 °. Die γIII-Phase wird in der JP-OS 53-39 324 beschrieben. Sie zeigt im Röntgenspektrum drei starke Linien beim doppelten Glanzwinkel 2 θ bei 6,2 °, 13,6 ° und 26,5 °; drei mittlere Linien bei 12,5 °, 25,8 ° und 27,7 ° und drei schwache Linien bei 16,5 °, 20,5 ° und 24,0 °. Die mittleren Linien bei 25,8 ° und 27,7 ° sind auf geringe Mengen α-Phase zurückzuführen.

Die DE-PS 1 184 881 beschreibt ein Verfahren zur Herstellung von linearen unsubstituierten Chinacridonpigmenten der yll-Phase durch Ringschluß von 2,5-Dianilinoterephthalsäure in Polyphosphorsäure und anschließende Hydrolyse auf Eiswasser. Die dabei erhaltenen Rohchinacridone werden anschließend mit wäßrigem Alkali behandelt und nach der Abtrennung in Form von wäßrigen neutralen Pasten unter Druck auf 120 bis 200 °C erhitzt. Das Verfahren ist aufwendig, da der Finish in zwei Stufen durchgeführt wird.

Die JP-A 53-39324 beschreibt die Herstellung von neuen Pigmenten der γIII-Phase des unsubstituierten Chinacridons durch langsame Zugabe von Wasser oder verdünnter Phosphorsäure zur Polyphosphorsäureringschlußschmelze bei 70 bis 140 °C bis zu einer Phosphorsäureendkonzentration von 62 bis 90 %. Die nach der Hydrolyse vorliegenden grobkristallinen Rohpigmente werden anschließend durch Feinverteilungs- und Finishverfahren in Pigmentform überführt.

Der vorliegenden Erfindung lag die Aufgabe zu Grunde, ein umweltfreundliches, kostengünstiges und technisch vereinfachtes Verfahren, das nicht zeitaufwendig ist, zur Herstellung von Chinacridonpigmenten mit hoher Reinheit zur Verfügung zu stellen, das die Nachteile des Standes der Technik überwindet.

Gegenstand der Erfindung ist ein Verfahren zur Herstellung von Pigmenten, Mischkristallpigmenten und Pigmentzubereitungen auf Basis von linearen unsubstituierten oder substituierten Chinacridonen der allgemeinen Formel (I) 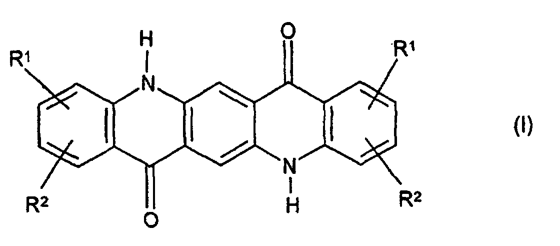 worin die Substituenten R¹ und R² gleich oder verschieden sind und Wasserstoff-, Chlor-, Brom- oder Fluoratome oder C₁-C₄-Alkyl, C₁-C₄-Alkoxy-, Carbonamidogruppen, die durch C₁-C₆-Alkylgruppen substituiert sein können; oder Phenoxy- oder C₆-C₁₀-Arylringe, an die noch weitere aromatische, aliphatische oder heterocyclische Ringe annelliert sein können, bedeuten,
durch Cyclisierung von Dianilinoterephthalsäure der Formel (la) 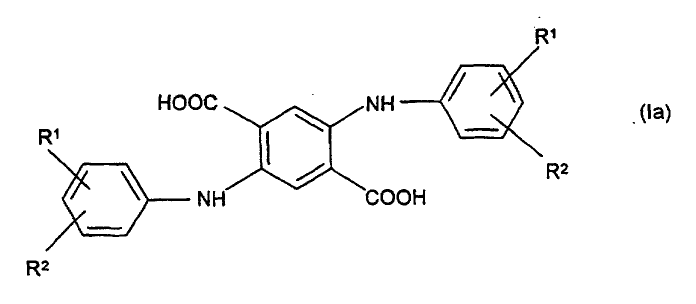 mit Polyphosphorsäure oder -ester, und anschließender Hydrolyse des Ringschlußgemisches aus Chinacridon und Polyphosphorsäure oder -ester, dadurch gekennzeichnet, daß das Ringschlußgemisch aus Chinacridon und Polyphosphorsäure oder -ester in eine solche Menge an Wasser oder wasserhaltige Orthophosphorsäure eindosiert wird, daß die Endkonzentration an Orthophosphorsäure in dem entstandenen Hydrolysegemisch gleich oder größer als 50 Gew.-% ist.

Zur Cyclisierung der Dianilinoterephthalsäure der Formel (la) wird im allgemeinen die 2,5- bis 10-fache Gewichtsmenge, vorzugsweise die 3- bis 5-fache Gewichtsmenge, Polyphosphorsäure oder Polyphosphorsäureester, z.B. Polyphosphorsäuremethylester, bezogen auf die Dianilinoterephthalsäure, eingesetzt. Der P₂O₅-Gehalt der Polyphosphorsäure oder des -esters liegt zweckmäßigerweise zwischen 80 und 87 %, entsprechend einem Phosphorsäureäquivalent von 110 bis 120 %. Größere Mengen an besagtem Ringschlußmittel können verwendet werden, dies ist aber im allgemeinen nicht erforderlich. Die Ringschlußtemperatur beträgt zweckmäßigerweise 80 bis 150 °C, vorzugsweise 120 bis 140 °C.

Für die Hydrolyse wird Wasser oder wäßrige Orthophosphorsäure verwendet. Dabei wird das Ringschlußgemisch, gegebenenfalls unter Druck, in das Wasser oder die wäßrige Orthophosphorsäure eindosiert. Die Hydrolysetemperatur liegt zweckmäßigerweise zwischen dem Gefrierpunkt der für die Hydrolyse verwendeten wäßrigen Phosphorsäure bzw. des Wassers und 200°C, vorzugsweise bei 20 bis 150°C. Die Hydrolyse kann kontinuierlich oder diskontinuierlich durchgeführt werden. Vorteilhafterweise wird sie kontinuierlich in einem statischen oder mechanischen Mischer durchgeführt. Im allgemeinen wird, bezogen auf die Polyphosphorsäure, die 0,2- bis 10-fache Menge Wasser oder wäßrige Phosphorsäure eingesetzt, um die gewünschte Endkonzentration an Orthophosphorsäure im Hydrolysegemisch zu erreichen, die vorzugsweise zwischen 75 und 98 Gew.-% liegt. Vorteilhafterweise wird 50 bis 95 gew.-%ige, bevorzugt 75 bis 90 gew.-%ige, Phosphorsäure eingesetzt, da hierbei während der Hydrolyse die Phosphorsäurekonzentration von 50 Gew.-%, vorzugsweise 75 Gew.-%, nicht unterschritten wird.

Im Falle der unsubstituierten Chinacridonpigmente der Formel (I), d.h. R¹ und R² bedeuten Wasserstoff, können nach dem erfindungsgemäßen Verfahren die α-Phase, die β-Phase als auch γ-Phasen erhalten werden. Um eine γ-Phase oder die α-Phase zu erhalten, sollte die Endkonzentration an Orthophosphorsäure im Hydrolysegemisch bei 82,5 bis 98 Gew.-%, insbesondere bei 84 bis 95 Gew.-%, liegen. Daher ist es hier zweckmäßig, mindestens 82,5 gew.-%ige, insbesondere mindestens 84 gew.-%ige, Orthophosphorsäure einzusetzen, damit während der Hydrolyse die Phosphorsäurekonzentration von 82,5 Gew.-% nicht unterschritten wird.

Überwiegend α-Phase von unsubstituiertem Chinacridonpigment der Formel (I) wird erhalten, wenn die Hydrolysetemperatur unter 110°C bleibt oder nur kurzfristig auf z.B. bis zu 160°C steigt. Durch thermische Nachbehandlung kann eine eventuell entstandene α-Phase in eine γ-Phase umgewandelt werden, beispielsweise bei Temperaturen von 110 bis 200°C für eine Dauer von 1 bis 10 Stunden.

Die β-Phase von unsubstituiertemChinacridonpigment der Formel (I) entsteht insbesondere dann, wenn die Endkonzentration an Orthophosphorsäure im Hydrolysegemisch 50 bis 70 Gew.-% beträgt. Im Bereich zwischen 70 und 82 Gew.-% können in verstärktem Maße Mischphasen entstehen.

Die Dauer der Hydrolyse ist abhängig von der Dosiergeschwindigkeit des Ringschlußgemisches.

Die Dosierung wird vorteilhaft so vorgenommen, daß der Konzentrationsgradient bei oder über 10 % pro Minute, vorzugsweise über 20 % pro Minute, insbesondere über 50 % pro Minute, beträgt. Unter dem Konzentrationsgradienten versteht man die relative Zunahme der Orthophosphorsäurekonzentration im Hydrolysegemisch in Prozent pro Zeiteinheit, bezogen auf die jeweilige Anfangs- und Endkonzentration der Orthophosphorsäure im Hydrolysegemisch.

Nach Beendigung der Dosierung ist es meist vorteilhaft, das Hydrolysegemisch einer Nachbehandlung in dem phosphorsauren Hydrolysegemisch bei Temperaturen von 20 bis 200°C, vorzugsweise bei 50 bis 175°C, für zweckmäßig 0,5 bis 24 Stunden, vorzugsweise für 1 bis 5 Stunden, zu unterziehen. Es ist jedoch auch möglich, nach beendeter Hydrolyse ohne besagte Nachbehandlung das Pigment, Präpigment oder Rohpigment aus dem Hydrolysegemisch zu isolieren.

Je nach den angewendeten Hydrolyse- und/oder Nachbehandlungsbedingungen bestehen die erhaltenen Suspensionen aus Pigmenten, feinteiligen Präpigmenten oder grobkristallinen Rohpigmenten, und mindestens 50 %iger Phosphorsäure als flüssiger Phase. Pigmente werden in üblicher Weise durch Filtration direkt isoliert. Vor der Filtration kann die Konzentration der Phosphorsäure durch Zugabe von Wasser oder verdünnter Phosphorsäure auf unter 40 % herabgesetzt werden. Präpigmente und Rohpigmente müssen noch einer weiteren Nachbehandlung unterzogen werden. Präpigmente werden, gegebenenfalls nach einer Zwischenisolierung, einer thermischen Nachbehandlung (Finishbehandlung) mit oder ohne Zusatz von Lösemitteln bei einer Temperatur von 50 bis 200 °C unterworfen und nach der Abtrennung des Lösemittels isoliert. Grobkristalline Rohpigmente werden einer mechanischen Feinverteilung unterworfen und anschließend die dabei erhaltenen Pigmente in üblicher Weise isoliert oder die dabei erhaltenen Präpigmente werden, gegebenenfalls nach einer Zwischenisolierung, einer Finishbehandlung mit oder ohne Zusatz von Lösemitteln bei einer Temperatur von 50 bis 200°C unterworfen und nach der Abtrennung des Lösemittels isoliert.

Die Feinverteilung kann durch Trocken- oder durch Naßmahlung erfolgen.

Bevorzugt wird eine Naßmahlung mit hohem Energieeintrag durchgeführt.

Für die Trockenmahlung eignen sich alle diskontinuierlichen und kontinuierlichen Schwing- oder Rollmühlen und für die Naßmahlung alle diskontinuierlichen und kontinuierlichen Rührwerkskugel-, Roll- und Schwingmühlen sowie Kneter. Zur Naßmahlung werden die Rohpigmentsuspensionen direkt, oder nach Zwischenisolierung, die feuchten Preßkuchen oder die getrockneten grobkristallinen Rohpigmente mit Wasser bis zu einer mahlfähigen Konsistenz verdünnt. Als Mahlkörper dienen Kugeln aus Zirkonoxid, Zirkonmischoxid, Aluminiumoxid, Stahl oder Quarz vom Durchmesser 0,2 bis 20 mm. Besonders geeignet sind Rührwerkskugelmühlen. Für die Naßmahlung in Rührwerkskugelmühlen ist eine hohe Mahlwirkung von Vorteil. Für eine Mahlung der gesuchten Effizienz sind z.B. Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise und die mit einer spezifischen Leistungsdichte von über 1,0 kW pro Liter Mahlraum und mit Mahlkörpern vom Durchmesser kleiner als 1 mm betrieben werden, wobei deren Rührwerksumfangsgeschwindigkeit über 12 m/s beträgt. Durch die bauliche Ausführung wird sichergestellt, daß die hohe Mahlenergie auf das Mahlgut übertragen wird. Zur Ermittlung der geeigneten Mahlbedingungen sind Vorversuche notwendig. Die Mahlung wird vorzugsweise im wäßrigen Medium und im alkalischen pH-Bereich durchgeführt. Sie kann auch im wäßrigen Medium unter Zusatz von geringen Mengen eines organischen Lösemittels, vorzugsweise bis zu 10 Gew.-%, bezogen auf das gesamte Mahlgut, in homogener Mischung durchgeführt werden. Es ist auch möglich, die Mahlung in organischem Medium durchzuführen.

Die Mahlung wird bei Temperaturen im Bereich von 0 bis 100°C, zweckmäßig bei einer Temperatur zwischen 10 und 60 °C, vorzugsweise bei 20 bis 50°C durchgeführt.

Die Pigmentkonzentration im Mahlgut ist abhängig von der Rheologie der Suspension und beträgt zweckmäßigerweise höchstens 30 %, vorzugsweise 5 bis 25 %, insbesondere 7,5 bis 20 %, der Mahlgutsuspension.

Als anorganische Basen kommen Natronlauge, Kalilauge, Soda, Pottasche und Ammoniak in Betracht. Auch Mischungen der genannten Basen können verwendet werden.

Das Mahlgut kann außer der flüssigen Phase und dem Rohpigment Pigmentdispergatoren, oberflächenaktive Mittel, Entschäumer und Zusatzstoffe enthalten.

Die Mahldauer ist abhängig von den Feinheitsanforderungen für das jeweilige Anwendungsgebiet, beispielsweise das Lack-, Druck- oder Kunststoffgebiet. Die Verweilzeit des Mahlguts in der Rührwerkskugelmühle liegt, je nach geforderter Feinheit, im allgemeinen zwischen 5 und 150 Minuten. Zweckmäßig erweist sich eine Dauer von 5 bis 45 Minuten, vorzugsweise 10 bis 30 Minuten.

Die nach der Hydrolyse und gegebenenfalls nach der Feinverteilung vorliegenden Präpigmente werden in wäßriger Suspension, neutral, sauer oder alkalisch, gegebenenfalls nach Zugabe von Lösemitteln, oder in organischem Medium einer Finishbehandlung unterzogen. Die für die Durchführung der Finishbehandlung einzuhaltenden Bedingungen sind in hohem Maße von den angestrebten Eigenschaften der Pigmente abhängig und werden jeweils daraufhin ausgerichtet. Normalerweise wird die Suspension der Präpigmente in dem betreffenden Milieu bei einer Temperatur im Bereich zwischen 50 und 200°C, gegebenenfalls unter erhöhtem Druck, 1 bis 24 Stunden lang behandelt. Im allgemeinen wird dafür die nach der Naßmahlung erhaltene Suspension ohne Zwischenisolierung des Mahlguts eingesetzt. Die zugefügte Lösemittelmenge kann hierbei innerhalb weiter Grenzen schwanken. Bevorzugt verwendet man die gleiche bis zur 5-fachen Gewichtsmenge an Lösemittel, bezogen auf das Gewicht der Präpigmente. Die thermische Behandlung im wäßrigen, wäßrig-organischen oder organischen Medium erfolgt vorzugsweise 1 bis 6 Stunden bei 50 bis 150°C. Nach beendetem Finish können die dafür gebrauchten Lösemittel wieder destillativ zurückgewonnen und erneut eingesetzt werden. Unter Ausnutzung der auf diese Weise zur Verfügung stehenden Variationsmöglichkeiten lassen sich je nach Verwendungszweck die nach dem erfindungsgemäßen Verfahren anfallenden Präpigmente in eine deckendere oder transparentere Form oder in eine andere Phase überführen, was über das Lösevermögen des in Betracht gezogenen Lösemittels, dessen Konzentration, die Auswahl der Temperatur und die Dauer der Finishbehandlung gesteuert werden kann. Die in Betracht kommenden Lösemittel werden nachstehend beschrieben.

Zur Erzielung bestimmter coloristischer Effekte kann dem isolierten Roh- oder Präpigment ein Peroxodisulfat zugesetzt und auf über 60°C erhitzt werden. Bezogen auf das Roh- oder Präpigment werden hierbei 1 bis 10 Gew.-% Peroxodisulfat in fester Form oder als wäßrig-alkalische Lösung zugesetzt. Die durch die Oxidation mit Peroxodisulfat verbrauchte Alkalimenge, wird durch Alkalizusatz vor oder während der Oxidation kompensiert. Für diese Nachbehandlung kommen Natrium-, Kalium- oder Ammoniumperoxodisulfat in Betracht.

Als oberflächenaktive Mittel kommen anionaktive, kationaktive und nichtionogene Tenside in Betracht.
Als anionaktive oberflächenaktive Mittel kommen Fettsäuretauride, Fettsäure-N-methyltauride, Fettsäureisäthionate, Alkylbenzolsulfonate, Alkylnaphthalinsulfonate, Alkylphenolpolyglykolethersulfate und Fettalkoholpolyglykolethersulfate, Fettsäuren, z.B. Palmitin-, Stearin- und Ölsäure, Seifen, z.B. Alkalisalze von Fettsäuren, Naphthensäuren und Harzsäuren, z.B. Abietinsäure, alkalilösliche Harze, z.B. kolophoniummodifizierte Maleinatharze in Betracht.
Als kationaktive oberflächenaktive Mittel kommen quaternäre Ammoniumsalze, Fettaminoxäthylate, Fettaminopolyglykolether und Fettamine in Betracht. Als nichtionogene oberflächenaktive Mittel kommen Fettalkoholpolyglykolether, Fettsäurepolyglykolester und Alkylphenolpolyglykolether in Betracht.

Als Pigmentdispergatoren, die bei dem Verfahren zur Anwendung kommen, werden Verbindungen mit der allgemeinen Formel (II)

P―Xm (II)

eingesetzt, in der
P für einen m-wertigen Rest eines linearen Chinacridons der vorstehend beschriebenen allgemeinen Formel (I) steht,
in dem R¹ und R² gleich oder verschieden sind und Wasserstoffatome oder Methylgruppen darstellen,
X eine Gruppe der Formel (III)

-COOM (III)

oder eine Gruppe der Formel (IV)

-SO₃M (IV)

darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, wie z.B. Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺; oder ein Ammoniumion mit der Struktur N⁺R³R⁴R⁵R⁶ definiert, wobei die Substituenten R³, R⁴, R⁵ und R⁶ am quartären N-Atom gleich oder verschieden sind und Wasserstoffatome oder C₁-C₃₀-Alkyl-, C₂-C₃₀-Alkenyl- oder C₅-C₃₀-Cycloalkylgruppen, die durch Hydroxy-, Di-(C₁-C₄-alkyl)amino-, Carboxy- oder Carboxamidgruppen substituiert sein können, oder eine Polyoxyalkylengruppe vom Typ -(CHR¹⁴-CH₂-O-)ₖ-H, in der R¹⁴ für Wasserstoff oder C₁-C₄-Alkyl steht, sein können, und k eine Zahl von 1 bis 30 ist, oder
X eine Gruppe der Formel (V) 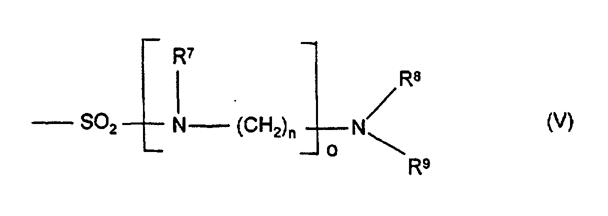 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6 und o die Zahl 0 oder 1; oder
X eine Gruppe der Formel (VI) 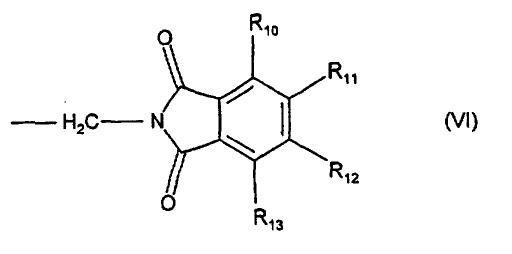 darstellt, wobei R¹⁰, R¹² und R¹³ ein Wasserstoff-, Fluor-, Chlor- oder Bromatom ist, und R¹¹ ein Wasserstoff-, Fluor, Chlor- oder Bromatom ist oder eine Nitro-, C₁-C₅-Alkyl-, C₁-C₆-Alkoxy- oder Benzoylaminogruppe bedeutet und m eine Zahl von 1 bis 4 ist.

Bevorzugt sind Pigmentdispergatoren mit der allgemeinen Formel (II), worin P den Rest des unsubstituierten linearen Chinacridons und X die Phthalimidomethylengruppe oder die Sulfonamidgruppe bedeutet.

Als organische Lösemittel kommen beispielsweise in Frage: Alicyclische Kohlenwasserstoffe wie z.B. Cyclohexan; C₁-C₈-Alkanole und alicyclische Alkohole wie z.B. Methanol, Ethanol, n- oder Isopropanol, n- oder Isobutanol, tert. Butanol, Pentanole, Hexanole, Cyclohexanol; Ethylenglykol, Propylenglykol, Glycerin; C₁-C₅-Dialkyl- oder cyclische Ketone wie z.B. Aceton, Diethylketon, Methylisobutylketon, Methylethylketon oder Cyclohexanon; Ether und Glykolether wie z.B. der Monomethyl- oder Monoethylether des Ethylen- und Propylenglykols, Butylglykol, Ethyldiglykol oder Methoxybutanol; aromatische Kohlenwasserstoffe wie z.B. Toluol, Xylole oder Ethylbenzol, cyclische Ether wie z.B. Tetrahydrofuran, aromatische Chlorkohlenwasserstoffe wie z.B. Chlorbenzol, o-Dichlorbenzol, 1,2,4-Trichlorbenzol oder Brombenzol; substituierte Aromaten wie z.B. Benzoesäure, Nitrobenzol oder Phenol; aliphatische Carbonsäureamide wie z.B. Formamid, Dimethylacetamid oder Dimethylformamid; cyclische Carbonsäureamide, wie z.B. N-Methylpyrrolidon; Carbonsäure-C₁-C₄- alkylester, wie z.B. Ameisensäurebutylester, Essigsäureethylester oder Propionsäurepropylester; Carbonsäure-C₁-C₄-glykolester, Phthalsäure- und Benzoesäure-C₁-C₄-alkylester wie z.B. Benzoesäureethylester; heterocyclische Basen wie z.B. Pyridin, Chinolin, Morpholin oder Picolin; sowie Dimethylsulfoxid und Sulfolan.

Bevorzugte organische Lösemittel sind Alkanole, insbesondere Ethanol, Propanole, Butanole und Pentanole; aliphatische Carbonsäureamide, insbesondere Dimethylformamid oder Dimethylacetamid; cyclische Carbonsäureamide, insbesondere N-Methylpyrrolidon; aromatische Kohlenwasserstoffe wie z.B. Toluol, Xylole oder Ethylbenzol; aromatische Chlorkohlenwasserstoffe wie z.B. Chlorbenzol oder o-Dichlorbenzol und Dimethylsulfoxid.

Die Herstellung von Chinacridon-Pigmenten nach dem erfindungsgemäßen Verfahren hat sich als besonders wirtschaftlich sowie umweltfreundlich erwiesen, weil bei der Hydrolyse die Hydrolyseprodukte direkt als Pigmente erhalten werden können, oder es werden grobkristalline Rohpigmente erhalten, die durch mechanische Feinverteilungsverfahren auch in Abwesenheit von Lösemitteln in Pigmentform überführt werden können. Es brauchen nur geringe Mengen an Chemikalien und Lösemitteln eingesetzt werden, welche anschließend weiterverarbeitet oder wieder vollständig regeneriert werden können. Somit treten keine Entsorgungsprobleme auf. Bei der Naßmahlung der Rohpigmente tritt keine Verschmutzung der Luft aufgrund von Staubentwicklung auf.

Zur Verbesserung der coloristischen Eigenschaften und zur Erzielung bestimmter coloristischer Effekte können an einer beliebigen Stelle des Verfahrens Lösemittel, Pigmentdispergatoren, oberflächenaktive Mittel, Entschäumer, Extender oder andere Zusatzstoffe zugesetzt werden. Es können auch Mischungen dieser Zusatzstoffe verwendet werden. Die Zugabe der Zusatzstoffe kann auf einmal oder in mehreren Portionen erfolgen. Die Zugabe kann vor, während oder nach dem Ringschluß, bei der Hydrolyse, der Mahlung oder der Finishbehandlung oder während oder nach der Isolierung vorgenommen werden. Der am besten geeignete Zeitpunkt muß zuvor durch orientierende Versuche ermittelt werden.

Es war überraschend und nicht vorhersehbar, daß, wenn bei der Hydrolyse des Ringschlußgemisches die Phosphorsäureendkonzentration über 50 Gew.-% beträgt, Chinacridone mit sehr hoher Reinheit und direkt in Pigmentform erhalten werden können, während nach den Angaben der EP-A-0 799 862 Chinacridonpigmente nur in verdünnter Phosphorsäure und bei Phosphorsäureendkonzentrationen unter 50 % erhalten werden.

Es war weiterhin überraschend und nicht vorhersehbar, daß, wenn bei der Hydrolyse des Ringschlußgemisches die Phosphorsäureendkonzentration über 82,5 Gew.-% beträgt, das Hydrolyseprodukt - im Falle des unsubstituierten Chinacridons der Formel (I) - direkt oder zumindest nach einer thermischen Nachbehandlung in der γ-Phase erhalten wird. Gemäß der EP-A-0 799 862 wird bei der Hydrolyse des Ringschlußgemisches in Wasser oder wäßriger Phosphorsäure bis zu einer Phosphorsäureendkonzentration unter 50 Gew.-% die β-Phase erhalten. Dies ist um so überraschender, da am Anfang der erfindungsgemäßen Hydrolyse der in der EP-A-0 799 862 angegebene Konzentrationsbereich der Phosphorsäure durchlaufen werden kann. Die gemäß der EP-A-0 799 862 hergestellten Pigmente der β-Phase können auch durch thermische Nachbehandlung mit konzentrierter, z.B. 85 %iger Phosphorsäure nicht mehr in Pigmente der γ-Phase überführt werden.

Die nach dem erfindungsgemäßen Verfahren erhaltenen Pigmente und Pigmentzubereitungen besitzen Eigenschaften, die mit den bei der Hydrolyse in niedrigerer Phosphorsäureendkonzentration hergestellten Pigmenten nicht erreicht werden können.

Die nach der vorliegenden Erfindung erhältlichen Pigmente zeichnen sich aus durch ihre hervorragenden coloristischen und rheologischen Eigenschaften, insbesondere durch hohe Farbstärke, hohe Reinheit, hohe Flockungsstabilität, gute Dispergierbarkeit und guten Glanz.

Die erfindungsgemäß hergestellten Pigmente lassen sich zum Pigmentieren von hochmolekularen organischen Materialien natürlicher oder synthetischer Herkunft einsetzen.

Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäßen Pigmente in einer Menge von vorzugsweise 0,1 bis 10 % ein.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes sowie ein wäßriger Lack auf Polyurethanbasis (PUR) ausgewählt.

Zur Beurteilung der Eigenschaften der nach der Erfindung erzeugten Pigmente auf dem Kunststoffsektor wurde aus der Vielzahl der bekannten Kunststoffe Weichpolyvinylchlorid (PVC) ausgewählt.

Zur Beurteilung der Eigenschaften der nach der Erfindung hergestellten Pigmente auf dem Drucksektor wurden aus der Vielzahl der bekannten Drucksysteme ein Tiefdrucksystem auf Nitrocellulosebasis (NC-Druck) ausgewählt.

Die Bestimmung der Farbstärke und des Farbtons erfolgte nach DIN 55986.

Die Rheologie des Mahlguts nach der Dispergierung (Millbase-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Bestimmung der Lösemittelechtheit erfolgte nach DIN 55976.

Die Bestimmung der Überlackierechtheit erfolgte nach DIN 53221.

Die Bestimmung der Ausblutechtheit erfolgte nach DIN 53775.

Die Bestimmung der Kristallphase der Rohpigmente, Präpigmente, Pigmente, Mischkristallpigmente und Pigmentzubereitungen erfolgte durch Röntgenspektroskopie. Die Aufnahme der Röntgenspektren erfolgte mit Cu Kα-Strahlung. Die Röntgenbeugungsspektren sind in digitaler Form wiedergegeben. Die relativen Intensitäten von starken Linien betragen 51 - 100 %, von mittleren Linien 11 - 50 % und von schwachen Linien 2 - 10 %.

Im vorangehenden Text und in den nachfolgenden Beispielen beziehen sich Teile jeweils auf Gewichtsteile und Prozente jeweils auf Gewichtsprozente der so beschriebenen Substanzen.

### Beispiele für unsubstituierte Chinacridone

### Beispiel 1

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch zur Hydrolyse in ein zweites Rührgefäß, welches 2039 Teile Phosphorsäure 85 %ig enthält innerhalb von 2 Minuten eindosiert und bei 145 °C gerührt. Dabei steigt die Temperatur auf 160 °C an. Nach der Hydrolyse liegt 90 %ige Phosphorsäure vor. Es wird auf 150 °C abgekühlt und 4 Stunden bei 150 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 64,9 Teile grobkristallines Rohpigment (C.I. Pigment Violet 19, ylll-Phase). Das Röntgenspektrum zeigt zwei starke Linien beim doppelten Glanzwinkel 2 θ bei 6,2 ° und 13,7 °, zwei mittlere Linien bei 12,5 ° und 26,7 ° und zwei schwache Linien bei 16,4 ° und 20,7 °. Im AM-Lack werden deckende, reine und farbstarke Lackierungen erhalten.

### Beispiel 2

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch auf 100 °C abgekühlt, innerhalb von 5 Minuten in ein zweites Rührgefäß, welches 2039 Teile Phosphorsäure 85 %ig enthält, eindosiert und bei 100 °C hydrolysiert. Dabei steigt die Temperatur auf 125 °C an. Nach der Hydrolyse liegt 90 %ige Phosphorsäure vor. Es wird auf 120 °C abgekühlt und 4 Stunden bei 120 °C gerührt. Danach wird auf 90 °C abgekühlt, das Pigment abgesaugt, mit 50 %iger Phosphorsäure bis zum farblosen Ablauf gewaschen, danach mit Wasser neutral gewaschen und bei 80 °C getrocknet.

Man erhält 72,3 Teile Pigment (C.I. Pigment Violet 19, α-Phase). Das Röntgenspektrum zeigt eine starke Linie beim doppelten Glanzwinkel 2 θ bei 6,3 °, fünf mittlere Linien bei 12,5 °, 14,0 °, 25,8 °, 27,3 ° und 28,1 ° und sechs schwache Linien bei 11,8 °, 16,6 °, 20,8 °, 22,1 °, 24,2 ° und 30,2 °. Im AM-Lack werden sehr transparente, farbtiefe und farbstarke Lackierungen erhalten. Der Farbton ist deutlich blauer als der von den Lackierungen der yll- and γIII-Phase.

### Beispiel 3

In ein Druckgefäß werden 650,3 Teile Polyphosphorsäure, die 85,0 % P₂O₅ enthält, eingefüllt. Danach werden 125,8 Teile 2,5-Dianilinoterephthalsäure unter Rühren bei 80 bis 90 °C eingetragen, auf 125 °C geheizt und 1 Stunde auf 125 °C erhitzt, wobei der Ringschluß zum Chinacridon erfolgt. Anschließend wird das Reaktionsgemisch in 10 Sekunden in ein zweites Druckgefäß, welches 184 Teile Wasser enthält, eindosiert und unter Rühren bei 150 °C unter Druck hydrolysiert. Nach der Hydrolyse liegt 90 %ige Phosphorsäure vor. Dabei steigt die Temperatur auf 172 °C an. Es wird auf 150 °C abgekühlt und 2 Stunden bei 150 °C gerührt. Danach wird auf 90 °C abgekühlt, das Pigment abgesaugt, mit 85 %iger Phosphorsäure bis zum farblosen Ablauf gewaschen, danach mit Wasser neutral gewaschen und bei 80 °C getrocknet.

Man erhält 112,7 Teile Pigment (C.I. Pigment Violet 19, γIII-Phase, mit Spuren α-Phase). Im AM-Lack werden transparente, farbtiefe und farbstarke Lackierungen erhalten.

### Beispiel 4

In ein Druckgefäß werden 370,5 Teile Polyphosphorsäure, die 85,0 % P₂O₅ enthält, eingefüllt. Danach werden 74,1 Teile 2,5-Dianilinoterephthalsäure unter Rühren bei 80 bis 90 °C eingetragen, auf 125 °C geheizt und 1 Stunde auf 125 °C erhitzt, wobei der Ringschluß zum Chinacridon erfolgt. Anschließend wird das Reaktionsgemisch in 10 Sekunden in ein zweites Druckgefäß, welches 980 Teile Phosphorsäure 40 %ig enthält, eindosiert und unter Rühren bei 150°C unter Druck hydrolysiert. Dabei steigt die Temperatur auf 170 °C an. Nach der Hydrolyse liegt 60 %ige Phosphorsäure vor. Es wird auf 150°C abgekühlt und 4 Stunden bei 150 °C gerührt. Dann wird auf 90 °C abgekühlt und das Hydrolysegemisch abgesaugt, mit 60 %iger Phosphorsäure bis zum farblosen Ablauf gewaschen, mit Wasser neutral gewaschen und bei 80 °C getrocknet.

Man erhält 66,4 Teile Pigment (C.I. Pigment Violet 19, β-Phase). Das Röntgenspektrum zeigt zwei starke Linien beim doppelten Glanzwinkel 2 θ bei 5,8 ° und 27,0 °, drei mittlere Linien bei 11,6°, 16,0 ° und 21,8 ° und vier schwache Linien bei 13,7°, 23,5°, 29,4° und 31,8°.

### Beispiel 5

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 2269 Teile Phosphorsäure 82,5 %ig enthält, eindosiert und unter Rühren bei 140 °C hydrolysiert. Dabei steigt die Temperatur auf 160 °C an. Nach der Hydrolyse liegt 87,8 %ige Phosphorsäure vor. Es wird auf 145 °C abgekühlt und 4 Stunden bei 145 °C gerührt. Danach wird auf 90 °C abgekühlt, das Pigment abgesaugt, mit 85 %iger Phosphorsäure bis zum farblosen Ablauf gewaschen, danach mit Wasser neutral gewaschen und bei 80 °C getrocknet.

Man erhält 67,2 Teile Pigment (C.I. Pigment Violet 19, γIII-Phase, mit Spuren α-Phase). Im AM-Lack werden transparente, farbtiefe und farbstarke Lackierungen erhalten. Die Überlackierechtheit ist einwandfrei.

### Beispiel 6

In ein Rührgefäß werden 450 Teile Polyphosphorsäure, die 85,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 2250 Teile Phosphorsäure 85 %ig enthält, eindosiert und unter Rühren bei 145 °C hydrolysiert. Dabei steigt die Temperatur auf 160 °C an. Nach der Hydrolyse liegt 90 %ige Phosphorsäure vor. Es wird auf 150 °C abgekühlt und 4 Stunden bei 150 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 69,6 Teile Rohpigment (C.I. Pigment Violet 19, γIII-Phase, mit Spuren α-Phase).

In einen Edelstahlbehälter, der mit 3256 Teilen Edelstahlkugeln vom Durchmesser 10 mm als Mahlkörper zu 55 Vol.-% gefüllt ist, werden 13 Teile Rohpigment und 117 Teile Dimethylformamid eingefüllt. Es wird 24 Stunden lang bei 75 % der kritischen Drehzahl auf einem Rolltisch gemahlen. Anschließend wird das Mahlgut von den Mahlkörpern abgesiebt, das Pigment abgesaugt, mit Wasser dimethylformamidfrei gewaschen und bei 80 °C getrocknet.

Man erhält 13 Teile Pigment (C.I. Pigment Violet 19, γll-Phase). Das Röntgenspektrum zeigt drei starke Linien beim doppelten Glanzwinkel 2 θ bei 6,5 °, 13,8 ° und 26,4°, neun mittlere Linien bei 13,1 °, 13,4 °, 15,9 °, 17,0 °, 20,4 °, 23,7 °, 25,0 °, 26,6° und 28,5 ° und fünf schwache Linien bei 21,8 °, 27,9 °, 30,5 °, 31,7° und 33,1 °. Im Kunststoff (PVC) werden farbstarke Färbungen mit sehr guter Dispergierbarkeit erhalten. Die Ausblutechtheit ist einwandfrei. Im AM-Lack werden deckende und farbstarke Lackierungen erhalten. Die Rheologie wird mit 5 bewertet und die Viskosität beträgt 4,0 s.

### Beispiel 7

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 2039 Teile Phosphorsäure 85 %ig enthält, eindosiert und unter Rühren bei 145 °C hydrolysiert. Dabei steigt die Temperatur auf 160 °C an. Nach der Hydrolyse liegt 90 %ige Phosphorsäure vor. Es wird auf 150 °C abkühlen lassen und 4 Stunden bei 150 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 64,9 Teile grobkristallines Rohpigment (C.I. Pigment Violet 19, γIII-Phase).

In eine Rührwerkskugelmühle (Hersteller: Draiswerke GmbH, Mannheim), die mit 342 Teilen Zirkonmischoxidperlen vom Durchmesser 0,3-0,4 mm als Mahlkörper gefüllt ist, wird eine Suspension, bestehend aus 90 Teilen Wasser und 10 Teilen grobkristallinem Rohpigment, eingefüllt. Es wird mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet. Man erhält 9,9 Teile Pigment (C.I. Pigment Violet 19, γIII-Phase, mit geringen Mengen α-Phase).

9 Teile Pigment werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist.

Man erhält eine Pigmentzubereitung. Im AM-Lack werden transparente, reine und farbstarke Lackierungen erhalten.

### Beispiel 8

In ein Rührgefäß werden 450 Teile Polyphosphorsäure, die 85,0 % P₂O₅ enthält, eingefüllt. Danach werden 150 Teile 2,5-Dianilinoterephthalsäure unter Rühren bei 125 °C eingetragen und 1 Stunde bei 125 °C gerührt, wobei der Ringschluß zum Chinacridon erfolgt. Anschließend wird das Reaktionsgemisch innerhalb von 5 Minuten in ein zweites Rührgefäß, welches 1713 Teile Phosphorsäure 90 %ig enthält, eindosiert und unter Rühren bei 60 °C hydrolysiert. Dabei steigt die Temperatur auf 85 °C an. Nach der Hydrolyse liegt 95 %ige Phosphorsäure vor. Es wird auf 100 °C geheizt und 4 Stunden bei 100 °C gerührt. Danach wird das Rohpigment abgesaugt, mit 85 %iger Phosphorsäure bis zum farblosen Ablauf gewaschen, danach mit Wasser neutral gewaschen und bei 80 °C getrocknet.

Man erhält 120,4 Teile Rohpigment (C.I. Pigment Violet 19, γIII-Phase).

In einen Porzellanbehälter, der mit 1200 Teilen Quarzitperlen vom Durchmesser 2-3 mm als Mahlkörper zu 90 Vol.-% gefüllt ist, werden 200 Volumenteile Ethanol und 20,0 Teile Rohpigment (C.I. Pigment Violet 19, γIII-Phase) eingefüllt. Es wird 8 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt. Die Mahlkörper werden mit Ethanol abgespült und die vereinigten Mahlgutsuspensionen zur Trockene eingedampft.

Man erhält 19,5 Teile Pigment (γll-Phase).

9,5 Teile Pigment werden mit 0,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.

Man erhält eine Pigmentzubereitung. Im AM-Lack werden deckende, sehr reine und farbstarke Lackierungen erhalten. Die Rheologie wird mit 5 bewertet und die Viskosität beträgt 3,1 s. Die Glanzmessung ergibt den Wert 84.

### Beispiel 9

In ein Rührgefäß werden 450 Teile Polyphosphorsäure, die 85,0 % P₂O₅ enthält, eingefüllt. Danach werden 150 Teile 2,5-Dianilinoterephthalsäure unter Rühren bei 125 °C eingetragen und 1 Stunde bei 125 °C gerührt, wobei der Ringschluß zum Chinacridon erfolgt. Anschließend wird das Reaktionsgemisch innerhalb von 5 Minuten in ein zweites Rührgefäß, welches 1713 Teile Phosphorsäure 90 %ig enthält, eindosiert und unter Rühren bei 60 °C hydrolysiert. Dabei steigt die Temperatur auf 85 °C an. Nach der Hydrolyse liegt 95 %ige Phosphorsäure vor. Es wird auf 100 °C geheizt und 4 Stunden bei 100 °C gerührt. Danach wird das Rohpigment abgesaugt, mit 85 %iger Phosphorsäure bis zum farblosen Ablauf gewaschen, danach mit Wasser neutral gewaschen und bei 80 °C getrocknet.

Man erhält 120,4 Teile Rohpigment (C.I. Pigment Violet 19, γIII-Phase).

In einen Edelstahlbehälter, der mit 1070 Teilen Porzellankugeln vom Durchmesser 10 mm als Mahlkörper zu 55 Vol.-% gefüllt ist, werden 30 Teile Rohpigment, 1 Teil Ethanol und 1,5 Teile Pigmentdispergator der Formel (II) eingefüllt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist. Es wird 24 Stunden lang bei 56 % der kritischen Drehzahl auf einem Rolltisch gemahlen. Anschließend wird das Mahlgut von den Mahlkörpern abgesiebt und bei 80 °C getrocknet.

Man erhält 28,9 Teile Pigmentzubereitung (C.I. Pigment Violet 19, γlll-Phase). Im AM-Lack werden transparente, reine und farbstarke Lackierungen erhalten. Die Rheologie wird mit 5 bewertet und die Viskosität beträgt 2,9 s. Die Glanzmessung ergibt den Wert 76.

### Beispiel 10

In ein Rührgefäß werden 450 Teile Polyphosphorsäure, die 85,0 % P₂O₅ enthält, eingefüllt. Danach werden 150 Teile 2,5-Dianilinoterephthalsäure unter Rühren bei 125 °C eingetragen und 1 Stunde bei 125 °C gerührt, wobei der Ringschluß zum Chinacridon erfolgt. Anschließend wird das Reaktionsgemisch innerhalb von 5 Minuten in ein zweites Rührgefäß, welches 1713 Teile Phosphorsäure 90 %ig enthält, eindosiert und unter Rühren bei 160 °C hydrolysiert. Dabei steigt die Temperatur auf 175 °C an. Nach der Hydrolyse liegt 95 %ige Phosphorsäure vor. Es wird auf 100 °C geheizt und 4 Stunden bei 100 °C gerührt. Danach wird auf 125 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 110,4 Teile Rohpigment (C.I. Pigment Violet 19, γIII-Phase).

In einem Porzellanbehälter, der mit 1200 Teilen Quarzitperlen vom Durchmesser 2-3 mm als Mahlkörper zu 90 Vol.-% gefüllt ist, werden 200 Volumenteile Aceton und 20,0 Teile Rohpigment (C.I. Pigment Violet 19, γIII-Phase) eingefüllt. Es wird 8 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpern abgesiebt. Die Mahlkörper werden mit Aceton abgespült und die vereinigten Mahlgutsuspensionen zur Trockene eingedampft.

Man erhält 19,2 Teile Pigment (γll-Phase). Im AM-Lack werden deckende, reine und farbstarke Lackierungen erhalten.

### Beispiel 11

In ein Rührgefäß werden 450 Teile Polyphosphorsäure, die 85,0 % P₂O₅ enthält, eingefüllt. Danach werden 150 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 574 Teile Phosphorsäure 80 %ig enthält, eindosiert und unter Rühren bei 50 °C hydrolysiert. Dabei steigt die Temperatur auf 115 °C an. Nach der Hydrolyse liegt 96,4 %ige Phosphorsäure vor. Es wird auf 150 °C erhitzt und 4 Stunden bei 150 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet. Man erhält 118,9 Teile grobkristallines Rohpigment (C.I. Pigment Violet 19, γIII-Phase).

In eine Rührwerkskugelmühle (Hersteller: Draiswerke GmbH, Mannheim), die mit 400 Teilen Zirkonmischoxidperlen vom Durchmesser 0,3-0,4 mm als Mahlkörper gefüllt ist, wird eine Suspension bestehend aus 90 Teilen Isobutanol 5 %ig und 10 Teilen grobkristallinem Rohpigment eingefüllt. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpem abgesiebt, die Mahlkörper werden mit Wasser abgespült und die Mahlgutsuspensionen vereinigt. Es wird zum Sieden erhitzt und das Isobutanol bis 100 °C am Übergang abdestilliert. Nach dem Abkühlen auf 60 °C wird das Pigment abgesaugt, mit Wasser gewaschen und bei 80 °C getrocknet.

Man erhält 9,9 Teile Pigment (C.I. Pigment Violet 19, γIII-Phase, mit geringen Mengen α-Phase). Im AM-Lack werden transparente, reine und farbstarke Lackierungen erhalten.

### Beispiel 12

In ein Rührgefäß werden 450 Teile Polyphosphorsäure, die 85,0 % P₂O₅ enthält, eingefüllt. Danach werden 150 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 574 Teile Phosphorsäure 80%ig enthält, eindosiert und unter Rühren bei 50 °C hydrolysiert. Dabei steigt die Temperatur auf 115 °C an. Nach der Hydrolyse liegt 96,4 %ige Phosphorsäure vor. Es wird auf 150 °C erhitzt und 4 Stunden bei 150 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 118,9 Teile grobkristallines Rohpigment (C.I. Pigment Violet 19, γIII-Phase, mit geringen Mengen α-Phase).

In eine Rührwerkskugelmühle (Hersteller: Draiswerke GmbH, Mannheim), die mit 405 Teilen Zirkonmischoxidperlen vom Durchmesser 0,3-0,4 mm als Mahlkörper gefüllt ist, wird eine Suspension, bestehend aus 90 Teilen Wasser und 10 Teilen grobkristallinem Rohpigment, eingefüllt. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Man erhält 25,4 Teile Preßkuchen 39,3 %ig.

Zur Finishbehandlung wird der Preßkuchen in 84,6 Teile Wasser eingetragen. Danach werden 50 Teile Isobutanol 100 %ig und 0,5 Teile Pigmentdispergator der Formel (II) hinzugefügt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Es wird zum Sieden erhitzt, 3 Stunden bei Siedetemperatur gerührt und anschließend das Isobutanol bis 100 °C am Übergang abdestilliert. Nach dem Abkühlen auf 60 °C wird die Pigmentzubereitung abgesaugt, mit Wasser gewaschen und bei 80 °C getrocknet. Man erhält 9,9 Teile Pigmentzubereitung. Im AM-Lack werden transparente, reine und farbstarke Lackierungen erhalten. Die Rheologie wird mit 5 bewertet und die Viskosität beträgt 3,5 s. Die Glanzmessung ergibt den Wert 78.

### Beispiel 13

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 790 Teile Phosphorsäure 85 %ig enthält, eindosiert und unter Rühren bei 145 °C hydrolysiert. Dabei steigt die Temperatur auf 160 °C an. Nach der Hydrolyse liegt 95 %ige Phosphorsäure vor. Es wird auf 145 °C abgekühlt und 10 Stunden bei 145 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.
Man erhält 64,6 Teile grobkristallines Rohpigment (C.I. Pigment Violet 19, γIII-Phase).

In eine Rührwerkskugelmühle (Hersteller: Draiswerke GmbH, Mannheim), die mit 418 Teilen Zirkonmischoxidperlen vom Durchmesser 0,3-0,4 mm als Mahlkörper gefüllt ist, wird eine Suspension, bestehend aus 90 Teilen Wasser und 10 Teilen grobkristallinem Rohpigment, eingefüllt. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahikörpern abgesiebt, die Mahlkörper werden mit Wasser abgespült und die vereinigten Mahlgutsuspensionen abgesaugt. Der Preßkuchen wird in ein Rührgefäß eingefüllt. Danach werden 50 Teile Wasser und 0,12 Teile einer 50 %igen wäßrigen Alkylphenolpolyglykolethersulfatlösung zugegeben. Es wird auf 60 °C geheizt und 2 Stunden bei 60 °C gerührt. Danach wird durch Zugabe von 0,08 Teilen Salzsäure 10 %ig pH 2 eingestellt, 1 Stunde bei 60 °C gerührt, das oberflächenbehandelte Pigment abgesaugt, mit Wasser neutral gewaschen und bei 80 °C getrocknet.

Man erhält 9 Teile oberflächenbehandeltes Pigment (C.I. Pigment Violet 19, γIII-Phase, mit geringen Mengen α-Phase). Im AM-Lack werden deckende, reine und farbstarke Lackierungen erhalten. Im PUR-Lack werden transparente, reine und farbstarke Lackierungen erhalten.

### Beispiel 14

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 790 Teile Phosphorsäure 85 %ig enthält, eindosiert und unter Rühren bei 145 °C hydrolysiert. Dabei steigt die Temperatur auf 160 °C an. Nach der Hydrolyse liegt 95 %ige Phosphorsäure vor. Es wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 67,2 Teile grobkristallines Rohpigment von C.I. Pigment Violet 19, α-Phase.

### Beispiel 15

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 790 Teile Phosphorsäure 85 %ig enthält, eindosiert und unter Rühren bei 145 °C hydrolysiert. Dabei steigt die Temperatur auf 160 °C an. Nach der Hydrolyse liegt 95 %ige Phosphorsäure vor. Es wird auf 145 °C abgekühlt und 10 Stunden bei 145 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.
Man erhält 64,6 Teile grobkristallines Rohpigment (C.I. Pigment Violet 19, γIII-Phase).
In eine Rührwerkskugelmühle (Hersteller: Draiswerke GmbH, Mannheim), die mit 413 Teilen Zirkonmischoxidperlen vom Durchmesser 0,3-0,4 mm als Mahlkörper gefüllt ist, wird eine Suspension, bestehend aus 85,5 Teilen Wasser, 4,5 Teilen Ethanol und 10 Teilen grobkristallinem Rohpigment, eingefüllt. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser ethanolfrei gewaschen und bei 80 °C getrocknet.
Man erhält 8,9 Teile Pigment (C.I. Pigment Violet 19, γIII-Phase, mit geringen Mengen α-Phase). Im PE-Lack werden helle, reine und farbstarke Lackierungen erhalten. Die Viskosität beträgt 3,6 s. Die Lösemittelechtheit ist einwandfrei.

### Beispiel 16

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch unter Rühren in 5 Minuten in 2039 Teile Phosphorsäure 85 %ig von 145 °C eindosiert und hydrolysiert. Dabei steigt die Temperatur auf 160 °C an. Nach der Hydrolyse liegt 90 %ige Phosphorsäure vor. Es wird auf 150 °C abgekühlt und 4 Stunden bei 150 °C gerührt. Danach wird auf 90 °C abgekühlt, das Rohpigment abgesaugt, mit 85 %iger Phosphorsäure bis zum farblosen Ablauf gewaschen, danach mit Wasser neutral gewaschen und bei 80 °C getrocknet.

Man erhält 64,9 Teile grobkristallines Rohpigment von C.I. Pigment Violet 19, γIII-Phase.

In eine Rührwerkskugelmühle (Hersteller: Draiswerke GmbH, Mannheim), die mit 342 Teilen Zirkonmischoxidperlen vom Durchmesser 0,3-0,4 mm als Mahlkörper gefüllt ist, wird eine Suspension, bestehend aus 85,5 Teilen Wasser, 4,5 Teilen Ethanol und 10 Teilen grobkristallinem Rohpigment, eingefüllt. Es wird mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet. Man erhält 9,9 Teile Pigment (C.I. Pigment Violet 19, γIII-Phase, mit geringen Mengen α-Phase). Im AM-Lack werden transparente, reine und farbstarke Lackierungen erhalten.

### Beispiel 17

In ein Rührgefäß werden 450 Teile Polyphosphorsäure, die 85,0 % P₂O₅ enthält, eingefüllt. Danach werden 150 Teile 2,5-Dianilinoterephthalsäure unter Rühren bei 125°C eingetragen, auf 140°C erhitzt und 1 Stunde bei 140 °C gerührt, wobei der Ringschluß zum Chinacridon erfolgt. Anschließend wird das Reaktionsgemisch innerhalb von 5 Minuten in ein zweites Rührgefäß, welches 950 Teile Phosphorsäure 85 %ig enthält, eindosiert und unter Rühren bei 145 °C hydrolysiert. Dabei steigt die Temperatur auf 165 °C an. Nach der Hydrolyse liegt 95 %ige Phosphorsäure vor. Es wird auf 150 °C abgekühlt und 5 Stunden bei 150 °C gerührt. Danach wird auf 90 °C abgekühlt, das Rohpigment abgesaugt, mit 50 %iger Phosphorsäure bis zum farblosen Ablauf gewaschen, danach mit Wasser neutral gewaschen und bei 80 °C getrocknet.

Man erhält 111,4 Teile Rohpigment von C.I. Pigment Violet 19, γIII-Phase, mit Spuren α-Phase.

In eine Rührwerkskugelmühle (Hersteller: Draiswerke GmbH, Mannheim), die mit 360 Teilen Zirkonmischoxidperlen vom Durchmesser 0,3-0,4 mm als Mahlkörper gefüllt ist, wird eine Suspension, bestehend aus 90 Teilen Natronlauge 1 %ig und 10 Teilen grobkristallinem Rohpigment, eingefüllt. Es wird mit einer Rührwerksumfangsgeschwindigkeit von 15,6 m/s sowie einer spezifischen Leistungsdichte von 3,1 kW pro Liter Mahlraum 10 Minuten lang bei 20°C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80 °C getrocknet. Man erhält 9,2 Teile Pigment (C.I. Pigment Violet 19, γIII-Phase, mit geringen Mengen α-Phase).

Im AM-Lack werden transparente, reine und farbstarke Lackierungen erhalten.

### Beispiel 18

In ein Rührgefäß werden 1000 Teile Polyphosphorsäure, die 85,0 % P₂O₅ enthält, eingefüllt. Danach werden 200 Teile 2,5-Dianilinoterephthalsäure unter Rühren bei 90 °C in 20 Minuten eingetragen. Dabei steigt die Temperatur auf 125 °C an. Es wird 1,25 Stunden auf 125 °C erhitzt, wobei der Ringschluß zum Chinacridon erfolgt. Anschließend wird das Reaktionsgemisch in einem Statischen Mischer, Typ ®Kenics KMR (Länge 10 cm, Durchmesser 9 mm, 8 Elemente, Lieferant: H. Ott, Neckargmünd) mit einem Volumenstrom von 3,12 Volumenteilen pro Stunde in einen Volumenstrom von 17,7 Volumenteilen pro Stunde 85 %iger Phosphorsäure von 50°C eindosiert und in 0,9 Sekunden hydrolysiert. Dabei steigt die Temperatur auf 85 °C an. Nach der Hydrolyse liegt 88,9 %ige Phosphorsäure vor. Man erhält 7821,7 Teile Rohpigmentsuspension. 870 Teile Rohpigmentsuspension werden in einem Rührgefäß auf 165 °C erhitzt und 5 Stunden bei 165 °C gerührt. Danach wird die Suspension unter Rühren in eine Mischung aus 2138 Teilen Wasser von 25 °C und 2138 Teilen Eis gegeben, das Pigment abgesaugt, mit Wasser neutral gewaschen und bei 80 °C getrocknet.

Man erhält 14,3 Teile Pigment (C.I. Pigment Violet 19, γIII-Phase, mit Spuren α-Phase). Im AM-Lack werden deckende Lackierungen erhalten.

### Beispiel 19

In ein Rührgefäß werden 450 Teile Polyphosphorsäure, die 83,0 % P₂O₅ enthält, eingefüllt. Danach werden 90 Teile 2,5-Dianilinoterephthalsäure unter Rühren bei 125 °C eingetragen und 1 Stunde auf 125 °C erhitzt, wobei der Ringschluß zum Chinacridon erfolgt. Anschließend wird das Reaktionsgemisch innerhalb von 5 Minuten in ein zweites Rührgefäß, welches 2039 Teile Phosphorsäure 85 %ig enthält, eindosiert und unter Rühren bei 145 °C hydrolysiert. Dabei steigt die Temperatur auf 150 °C an. Nach der Hydrolyse liegt 90 %ige Phosphorsäure vor. Es wird auf 4 Stunden bei 150 °C gerührt. Danach wird auf 90 °C abgekühlt und 1999 Teile Wasser von 25 °C zudosiert. Nach der Wasserzugabe liegt 40 %ige Phosphorsäure vor. Dann werden 7,5 Teile Pigmentdispergator der Formel (II) zugegeben. In dieser Formel (II) bedeutet P den Rest des linearen unsubstituierten Chinacridons und X die Gruppe der Formel (VI), worin R¹⁰, R¹¹, R¹² und R¹³ je ein Wasserstoffatom bedeutet und m die Zahl 2,1 ist. Es wird 1 Stunde bei 90 °C gerührt. Danach wird die Pigmentzubereitung abgesaugt, mit Wasser neutral gewaschen und bei 80 °C getrocknet.

Man erhält 86,8 Teile Pigmentzubereitung (C.I. Pigment Violet 19, γll-Phase, mit Spuren β-Phase). Im AM-Lack werden transparente Lackierungen mit sehr tiefem Farbton erhalten.

### Beispiel 20

In ein Rührgefäß werden 1000 Teile Polyphosphorsäure, die 83,0 % P₂O₅ enthält, eingefüllt. Danach werden 200 Teile 2,5-Dianilinoterephthalsäure unter Rühren bei 90 °C in 40 Minuten eingetragen. Dabei steigt die Temperatur auf 120 °C an. Es wird auf 125 °C erhitzt und 1 Stunde bei 125°C gerührt, wobei der Ringschluß zum Chinacridon erfolgt. Anschließend wird das Reaktionsgemisch in einem Zahnscheibendispergierer Typ IKA SD 41 (Lieferant: Janke u. Kunkel, Staufen) bei 13000 Upm und 3 mm Statorschlitzweite, mit einem Volumenstrom von 4,72 Volumenteilen pro Stunde in einen Volumenstrom von 23,5 Volumenteilen pro Stunde 85 %iger Phosphorsäure von 50°C eindosiert und in 4 Sekunden hydrolysiert. Dabei steigt die Temperatur auf 84 °C an. Nach der Hydrolyse liegt 87,9 %ige Phosphorsäure vor. Man erhält 6744,5 Teile Rohpigmentsuspension. 2622 Teile Rohpigmentsuspension werden in einem Rührgefäß auf 162 °C erhitzt und 5 Stunden bei 162 °C gerührt. Danach wird auf 90 °C abgekühlt und unter Rühren 3088 Teile Wasser von 25 °C zulaufen lassen. Nach der Wasserzugabe liegt 40 %ige Phosphorsäure vor. Danach wird das Pigment abgesaugt, mit Wasser neutral gewaschen und bei 80 °C getrocknet.

Man erhält 46,8 Teile Pigment (C.I. Pigment Violet 19, γIII-Phase, mit Spuren α-Phase). Im AM-Lack werden transparente und farbtiefe Lackierungen erhalten.

### Beispiele für substituierte Chinacridone

### Beispiel 21

In ein Rührgefäß werden 100 Teile Polyphosphorsäure, die 83,0 % P₂O₅ enthält, eingefüllt. Danach werden 20 Teile 2,5-Di-(2-chloranilino)-terephthalsäure unter Rühren bei 125 °C eingetragen und 2 Stunden auf 125 °C erhitzt, wobei der Ringschluß zum Chinacridon erfolgt. Anschließend wird das Reaktionsgemisch in 5 Minuten in ein zweites Rührgefäß, welches 318 Teile Phosphorsäure 70 %ig enthält, eindosiert und unter Rühren bei 100 °C hydrolysiert. Dabei steigt die Temperatur auf 130 °C an. Nach der Hydrolyse liegt 80 %ige Phosphorsäure vor. Es wird auf 145 °C geheizt und 4 Stunden bei 145 °C gerührt. Dann wird auf 90 °C abgekühlt und das Hydrolysegemisch unter Rühren in 2940 Teile Wasser von 25 °C gegossen. Danach wird das Pigment abgesaugt, mit Wasser neutral gewaschen und bei 80°C getrocknet.

Man erhält 17,1 Teile 4,11-Dichlorchinacridon-Pigment. Im AM-Lack werden transparente und farbstarke Lackierungen erhalten. Die Rheologie wird mit 4-5 bewertet, die Viskosität beträgt 4,4 s und die Glanzmessung ergibt den Wert 77.

Das Pigment ist im AM-Lack wesentlich farbstärker, deutlich reiner und glänzender als die gemäß der EP-A-0 799 862 und der JP-OS 9-110867 hergestellten Pigmente.

### Beispiel 22

In ein Rührgefäß werden 600 Teile Polyphosphorsäure, die 85,0 % P₂O₅ enthält, eingefüllt. Danach werden 100 Teile 2,5-Di-(3-chloranilino)- terephthalsäure unter Rühren bei 125 °C eingetragen und 2 Stunden auf 125 °C erhitzt, wobei der Ringschluß zum Chinacridon erfolgt. Anschließend wird das Reaktionsgemisch in 5 Minuten in ein zweites Rührgefäß, welches 1081 Teile Phosphorsäure 60 %ig enthält, eindosiert und unter Rühren bei 116 °C hydrolysiert. Dabei steigt die Temperatur auf 134 °C an. Nach der Hydrolyse liegt 80 %ige Phosphorsäure vor. Es wird auf 140 °C geheizt und 2 Stunden bei 140 °C gerührt. Danach wird auf 25 °C abgekühlt und das Hydrolysegemisch unter Rühren in 1690 Teile Wasser von 25 °C gegossen, das Pigment abgesaugt und mit Wasser neutral gewaschen. Der Filterrückstand wird unter Rühren in 2000 Teile 5 %ige Kalilauge eingetragen, auf 80 °C geheizt und 1 Stunde bei 80 °C gerührt. Anschließend wird das Pigment abgesaugt, mit Wasser neutral gewaschen und bei 80 °C getrocknet.

Man erhält 89,7 Teile Pigment (C.I. Pigment Red 209). Im AM-Lack werden transparente und farbstarke Lackierungen erhalten. Die Rheologie wird mit 5 bewertet, die Viskosität beträgt 3,8 s und die Glanzmessung ergibt den Wert 42. Das Pigment ist etwas deckender, wesentlich farbstärker und glänzender als das gemäß der EP-A-0 799 862 hergestellte Pigment.

### Beispiel 23

In ein Rührgefäß werden 150 Teile Polyphosphorsäure, die 83,0 % P₂O₅ enthält, eingefüllt. Danach werden 20 Teile 2,5-Di-(3-chlor-4-methyl-anilino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten in ein zweites Rührgefäß, welches 477 Teile Phosphorsäure 70 %ig enthält, eindosiert und unter Rühren bei 100 °C hydrolysiert. Dabei steigt die Temperatur auf 125 °C an. Nach der Hydrolyse liegt 80 %ige Phosphorsäure vor. Es wird auf 135 °C geheizt und 4 Stunden bei 135 °C gerührt. Danach wird auf 90 °C abgekühlt und das Hydrolysegemisch unter Rühren in 4340 Teile Wasser von 25 °C gegossen. Dann wird das Pigment abgesaugt, mit Wasser neutral gewaschen und bei 80 °C getrocknet.

Man erhält 17,1 Teile 2,9-Dimethyl-3,10-dichlorchinacridon-Pigment. Im AM-Lack werden transparente und farbstarke Lackierungen erhalten. Die Rheologie wird mit 4 bewertet, die Viskosität beträgt 3,9 s und die Glanzmessung ergibt den Wert 55.

Das Pigment ist deutlich farbstärker und etwas reiner als das gemäß der EP-A-0 799 862 hergestellte Pigment.

### Beispiel 24

In ein Rührgefäß werden 450 Teile Polyphosphorsäure, die 83,0 % P₂O₅ enthält, eingefüllt. Danach werden 150 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten in ein zweites Rührgefäß, welches 1940 Teile Phosphorsäure 85 %ig enthält, eindosiert und unter Rühren bei 140 °C hydrolysiert. Dabei steigt die Temperatur auf 150 °C an. Nach der Hydrolyse liegt 90 %ige Phosphorsäure vor. Es wird 4 Stunden bei 150 °C gerührt. Danach wird auf 90 °C abgekühlt und das Hydrolysegemisch unter Rühren in 6000 Teile Wasser von 25 °C gegossen. Dann wird das Pigment abgesaugt, mit Wasser neutral gewaschen und bei 80 °C getrocknet.

Man erhält 133,4 Teile Pigment (C.I. Pigment Red 122, α-Phase). Das Röntgenspektrum zeigt eine starke Linie beim doppelten Glanzwinkel 2 Θ bei 5,5 °, vier mittlere Linien bei 11,1 °, 14,0 °, 25,4 ° und 27,3 ° und acht schwache Linien bei 14,9 °, 15,3 °, 18,4 °, 22,5 °, 23,8 °, 28,3 °, 29,5 ° und 30,9 °. Im AM-Lack werden farbstarke Lackierungen erhalten. Die Rheologie wird mit 5 bewertet, die Viskosität beträgt 3,5 s und die Glanzmessung ergibt den Wert 50. Das Pigment ist bedeutend farbstärker als das gemäß der JP-OS 9-110 867 hergestellte Pigment, das in der β-Phase vorliegt. Das Röntgenspektrum der β-Phase zeigt zwei kräftige Linien beim doppelten Glanzwinkel 2 θ bei 7,3 ° und 13,9 °, eine mittlere Linie bei 26,9 ° und sieben schwache Linien bei 5,6 °, 14,8 °, 16,8 °, 17,7 °, 22,1 °, 25,4 ° und 28,0 °.

### Beispiel 25

In ein Rührgefäß werden 450 Teile Polyphosphorsäure, die 83,0 % P₂O₅ enthält, eingefüllt. Danach werden 150 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten in ein zweites Rührgefäß, welches 1940 Teile Phosphorsäure 85 %ig enthält, eindosiert und unter Rühren bei 140 °C hydrolysiert. Dabei steigt die Temperatur auf 150 °C an. Nach der Hydrolyse liegt 90 %ige Phosphorsäure vor. Es wird 4 Stunden bei 150 °C gerührt. Danach wird auf 90 °C abgekühlt und das Hydrolysegemisch unter Rühren in 6000 Teile Wasser von 25 °C gegossen. Danach wird das Pigment abgesaugt, mit Wasser neutral gewaschen und bei 80 °C getrocknet.

Man erhält 133,4 Teile Pigment (C.I. Pigment Red 122, α-Phase).

19 Teile dieses Pigments werden mit 1 Teil Pigmentdispergator der Formel (II) mechanisch gemischt. In dieser Formel (II) bedeutet P Rest den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist.

Man erhält eine Pigmentzubereitung. Im AM-Lack werden transparente und farbstarke Lackierungen erhalten. Die Rheologie wird mit 5 bewertet, die Viskosität beträgt 3,3 s und die Glanzmessung ergab den Wert 77. Die Pigmentzubereitung ist nicht geflockt.

### Beispiel 26

In ein Druckgefäß werden 405,7 Teile Polyphosphorsäure, die 85,0 % P₂O₅ enthält, eingefüllt. Danach werden 20,3 Teile 2,5-Dianilinoterephthalsäure und 60,9 Teile 2,5-Di-(4-toluidino)-terephthalsäure unter Rühren bei 80 bis 90 °C eingetragen, auf 125 °C geheizt und 1 Stunde auf 125 °C erhitzt, wobei der Ringschluß zum Chinacridon erfolgt. Anschließend wird das Reaktionsgemisch in 10 Sekunden in ein zweites Druckgefäß, welches 184 Teile Wasser enthält, eindosiert und unter Rühren bei 150 °C unter Druck hydrolysiert. Nach der Hydrolyse liegt 89,7 %ige Phosphorsäure vor. Dabei steigt die Temperatur auf 180 °C an. Es wird auf 150 °C abgekühlt und 3 Stunden bei 150 °C gerührt. Dann wird auf 90 °C abgekühlt und das Hydrolysegemisch unter Rühren in 6000 Teile Wasser von 25 °C gegossen. Danach wird das Mischkristallpigment abgesaugt, mit Wasser neutral gewaschen und bei 80 °C getrocknet.

Man erhält 74,1 Teile Mischkristallpigment. Im AM-Lack werden transparente und farbstarke Lackierungen erhalten.

### Beispiel 27

In ein Rührgefäß werden 450 Teile Polyphosphorsäure, die 83,0 % P₂O₅ enthält, eingefüllt. Danach werden 37,5 Teile 2,5-Dianilinoterephthalsäure und 112,5 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten ein zweites Rührgefäß, welches 1431 Teile Phosphorsäure 70 %ig enthält, eindosiert und unter Rühren bei 25 °C hydrolysiert. Dabei steigt die Temperatur auf 60 °C an. Nach der Hydrolyse liegt 80 %ige Phosphorsäure vor. Es wird auf 120 °C geheizt und 5 Stunden bei 120 °C gerührt. Dann wird auf 90 °C abgekühlt und das Hydrolysegemisch unter Rühren in 6000 Teile Wasser von 25 °C gegossen. Danach wird auf 90 °C geheizt, das Mischkristallpigment abgesaugt, mit Wasser neutral gewaschen und bei 80 °C getrocknet.

Man erhält 138,3 Teile Mischkristallpigment. Es liegt das Spektrum des Mischkristallpigments vor. Die typischen Reflexe des unsubstituierten Chinacridons sind nicht nachweisbar. Das Röntgenspektrum zeigt eine starke Linie beim doppelten Glanzwinkel 2 θ bei 5,6 °, vier mittlere Linien bei 11,2 °, 14,0 °, 25,7 ° und 27,4 ° und fünf schwache Linien bei 15,0°, 18,1 °, 22,5 °, 24,3 ° und 29,9°. Im

AM-Lack werden transparente und farbstarke Lackierungen erhalten. Die Rheologie wird mit 4-5 bewertet und die Viskosität beträgt 3,9 s. Die Glanzmessung ergibt den Wert 69.

Im PE-Lack werden transparente und farbstarke Lackierungen erhalten. Die Metalliclackierung ist farbstark. Die Rheologie wird mit 3 bewertet und die Viskosität beträgt 3,9 s.

Im PUR-Lack werden transparente und farbstarke Lackierungen erhalten. Die Metalliclackierung ist farbstark. Die Rheologie wird mit 1-3 bewertet. Im NC-Druck werden transparente, farbstarke und hochglänzende Drucke erhalten. Die Lösemittelechtheit ist gut.

### Beispiel 28

In ein Rührgefäß werden 450 Teile Polyphosphorsäure, die 83,0 % P₂O₅ enthält, eingefüllt. Danach werden 37,5 Teile 2,5-Dianilinoterephthalsäure und 112,5 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten ein zweites Rührgefäß, welches 1431 Teilen Phosphorsäure 70 %ig enthält, eindosiert und unter Rühren bei 25 °C hydrolysiert. Dabei steigt die Temperatur auf 60 °C an. Nach der Hydrolyse liegt 80 %ige Phosphorsäure vor. Es wird auf 120 °C geheizt und 5 Stunden bei 120 °C gerührt. Dann wird auf 90 °C abgekühlt und das Hydrolysegemisch unter Rühren in 6000 Teile Wasser von 25 °C gegossen. Danach wird auf 90 °C geheizt, das Mischkristallpigment abgesaugt, mit Wasser neutral gewaschen und bei 80 °C getrocknet.

Man erhält 138,3 Teile Mischkristallpigment.

19 Teile Mischkristallpigment werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.

Man erhält eine Pigmentzubereitung. Im AM-Lack werden transparente und farbstarke Lackierungen erhalten. Die Rheologie wird mit 5 bewertet, die Viskosität beträgt 3,7 s und die Glanzmessung ergab den Wert 77. Das Pigment ist nicht geflockt.

### Beispiel 29

In ein Rührgefäß werden 200 Teile Polyphosphorsäure, die 83,0 % P₂O₅ enthält, eingefüllt. Danach werden 20 Teile 2,5-Di-(4-carbonamido-anilino)- terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten in ein zweites Rührgefäß, welches 636 Teile Phosphorsäure 70 %ig enthält, eindosiert und unter Rühren bei 100 °C hydrolysiert. Dabei steigt die Temperatur auf 130 °C an. Nach der Hydrolyse liegt 80 %ige Phosphorsäure vor. Es wird 4 Stunden bei 140 °C gerührt. Danach wird auf 90 °C abgekühlt und das Hydrolysegemisch unter Rühren in 5000 Teile Wasser von 25 °C gegossen. Dann wird das Präpigment abgesaugt und mit Wasser neutral gewaschen. Der Filterrückstand wird unter Rühren in 200 Teile 1 %ige Natronlauge eingetragen und 1 Stunde bei 25 °C gerührt. Anschließend wird das Präpigment abgesaugt, mit Wasser neutral gewaschen und bei 80 °C getrocknet.

Man erhält 17,7 Teile Präpigment.

Zur Finishoperation werden 7,3 Teile Präpigment in 50 Teile N-Methylpyrrolidon eingetragen und verrührt. Danach wird auf 150 °C geheizt und 3 Stunden bei dieser Temperatur gerührt. Anschließend wird auf 25 °C abgekühlt, das Pigment abgesaugt, mit Ethanol N-methylpyrrolidonfrei gewaschen und bei 80 °C getrocknet. Man erhält 7,0 Teile 2,9-Dicarbonamidochinacridon-Pigment. Im AM-Lack werden hochdeckende und farbstarke Lackierungen mit sehr reinem Farbton erhalten.

### Beispiel 30

In ein Rührgefäß werden 500 Teile Polyphosphorsäure, die 85,0 % P₂O₅ enthält, eingefüllt. Danach werden 25 Teile 2,5-Dianilinoterephthalsäure und 75 Teile 2,5-Di-(4-toluidino)-terephthalsäure unter Rühren bei 90 bis 125 °C eingetragen und 1 Stunde auf 125 °C erhitzt, wobei der Ringschluß zum Chinacridon erfolgt. Anschließend wird das Reaktionsgemisch in 5 Minuten in ein zweites Rührgefäß, welches 1200 Teile Phosphorsäure 85 %ig enthält, eindosiert und unter Rühren bei 140 °C hydrolysiert. Dabei steigt die Temperatur auf 160 °C an. Nach der Hydrolyse liegt 94 %ige Phosphorsäure vor. Es wird auf 176 °C geheizt und 4 Stunden bei 176 °C gerührt. Dann wird das Hydrolysegemisch auf 90 °C abgekühlt, abgesaugt und mit 500 Teilen Phosphorsäure 85 %ig bis zum farblosen Ablauf gewaschen. Der Filterrückstand wird unter Rühren in 2000 Teile Wasser eingetragen und 0,5 Stunden gerührt. Danach wird das Rohpigment abgesaugt, mit Wasser neutral gewaschen und bei 80 °C getrocknet.

Man erhält 56,4 Teile Rohpigment.

In eine Rührwerkskugelmühle (Hersteller: Draiswerke GmbH, Mannheim), die mit 411 Teilen Zirkonmischoxidperlen vom Durchmesser 0,3-0,4 mm als Mahlkörper gefüllt ist, wird eine Suspension, bestehend aus 85 Teilen Natronlauge 1 %ig, 5 Teilen Ethanol und 10 Teilen Rohpigment, eingefüllt. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishbehandlung wird der Preßkuchen in ein Rührgefäß eingefüllt. Danach werden 100 Teile Wasser und 0,25 Teile einer 50 %igen wäßrigen Alkylphenolpolyglykolethersulfatlösung zugegeben. Es wird auf 60 °C geheizt, durch Zugabe von 0,25 Teilen Salzsäure 10 %ig pH 2 eingestellt, 1 Stunde bei 60 °C gerührt, das oberflächenbehandelte Pigment abgesaugt, mit Wasser neutral gewaschen und bei 80 °C getrocknet.

Man erhält 9,7 Teile oberflächenbehandeltes Mischkristallpigment. Im AM-Lack werden transparente, reine und farbstarke Lackierungen erhalten.

### Beispiel 31

In ein Rührgefäß werden 800 Teile Polyphosphorsäure, die 85,0 % P₂O₅ enthält, eingefüllt. Danach werden 100 Teile 2,5-Di-(3-chloranilo)- terephthalsäure unter Rühren bei 125 °C eingetragen und 2,5 Stunden auf 125 °C erhitzt, wobei der Ringschluß zum Chinacridon erfolgt. Anschließend wird das Reaktionsgemisch in 5 Minuten in ein zweites Rührgefäß, das 4155 Teile Phosphorsäure 85 %ig enthält, eindosiert und unter Rühren bei 140 °C hydrolysiert. Dabei steigt die Temperatur auf 160 °C an. Nach der Hydrolyse liegt 90 %ige Phosphorsäure vor. Es wird auf 150 °C abgekühlt und 3 Stunden bei 150 °C gerührt. Danach wird auf 90 °C abgekühlt und das Hydrolysegemisch unter Rühren in 6000 Teile Wasser von 25 °C gegossen. Dann wird auf 90 °C geheizt, das Rohpigment abgesaugt und mit Wasser neutral gewaschen. Der Filterrückstand wird unter Rühren in 1680 Teile 5 %ige Kalilauge eingetragen, auf 80 °C geheizt und 1 Stunde bei 80 °C gerührt. Anschließend wird das Rohpigment abgesaugt, mit Wasser neutral gewaschen und bei 80 °C getrocknet.

Man erhält 83,1 Teile Rohpigment.

In einen Edelstahlbehälter, der mit 3256 Teilen Edelstahikugeln vom Durchmesser 10 mm als Mahlkörper zu 55 Vol.-% gefüllt ist, werden 20 Teile Rohpigment und 120 Teile Dimethylformamid eingefüllt. Es wird 24 Stunden lang bei 75 % der kritischen Drehzahl auf einem Rolltisch gemahlen. Anschließend wird das Mahlgut von den Mahlkörpem abgesiebt, abgesaugt, das Pigment mit Wasser dimethylformamidfrei gewaschen und bei 80 °C getrocknet.

Man erhält 20 Teile Pigment (C.I. Pigment Red 209). Im Kunststoff (PVC) werden farbstarke Färbungen mit sehr guter Dispergierbarkeit erhalten. Die Ausblutechtheit ist einwandfrei.

### Beispiel 32

In ein Rührgefäß werden 450 Teile Polyphosphorsäure, die 83,0 % P₂O₅ enthält, eingefüllt. Danach werden 150 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch zur Hydrolyse in 5 Minuten in ein zweites Rührgefäß, welches 1486 Teile Phosphorsäure 85 %ig enthält, eingefüllt und bei 140°C gerührt. Dabei steigt die Temperatur auf 150°C an. Nach der Hydrolyse liegt 95 %ige Phosphorsäure vor. Es wird auf 160 °C geheizt und 4,5 Stunden bei 160 °C gerührt. Danach wird auf 90 °C abgekühlt, das Rohpigment abgesaugt, mit Wasser neutral gewaschen und bei 80 °C getrocknet.

Man erhält 95,8 Teile Rohpigment von C.I. Pigment Red 122, β-Phase.

In eine Rührwerkskugelmühle (Hersteller: Draiswerke GmbH, Mannheim), die mit 398 Teilen Zirkonmischoxidperlen vom Durchmesser 0,3-0,4 mm als Mahlkörper gefüllt ist, wird eine Suspension bestehend aus 90 Teilen Isopropanol 3 %ig und 10 Teilen Rohpigment von C.I. Pigment Red 122, β-Phase, eindosiert. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpern abgesiebt, die Mahlkörper werden mit Wasser abgespült und die vereinigten Mahlgutsuspensionen abgesaugt.

Zur Finishbehandlung wird der Preßkuchen in ein Rührgefäß eingefüllt. Danach werden 100 Teile Wasser und 0,25 Teile einer 50 %igen wäßrigen Alkylphenolpolyglykolethersulfatlösung zugegeben. Es wird auf 60 °C geheizt, durch Zugabe von 0,15 Teilen Salzsäure 10 %ig pH 2 eingestellt, 1 Stunde bei 60 °C gerührt, das oberflächenbehandelte Pigment abgesaugt, mit Wasser neutral gewaschen und bei 80°C getrocknet.

Man erhält 9,5 Teile oberflächenbehandeltes Pigment (C.I. Pigment Red 122, α-Phase). Im AM-Lack werden reine und farbstarke Lackierungen erhalten.

### Beispiel 33

In ein Rührgefäß werden 450 Teile Polyphosphorsäure, die 83,0 % P₂O₅ enthält, eingefüllt. Danach werden 37,5 Teile 2,5-Dianilinoterephthalsäure und 112,5 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten ein zweites Rührgefäß, welches 1731,8 Teilen Phosphorsäure 40 %ig enthält, eindosiert und unter Rühren bei 25 °C hydrolysiert. Dabei steigt die Temperatur auf 110 °C an. Nach der Hydrolyse liegt 55 %ige Phosphorsäure vor. Es wird auf 90 °C abgekühlt, 823,4 Teile Wasser von 25 °C zudosiert und 1 Stunde bei 90 °C gerührt. Danach wird das Mischkristallpigment abgesaugt, mit Wasser neutral gewaschen und bei 80 °C getrocknet.

Man erhält 134 Teile Mischkristallpigment. Es liegt das Spektrum des Mischkristallpigments vor. Die typischen Reflexe des unsubstituierten Chinacridons sind nicht nachweisbar. Im AM-Lack werden sehr transparente und farbstarke Lackierungen erhalten. Die Rheologie wird mit 3-4 bewertet und die Viskosität beträgt 3,7 s. Die Glanzmessung ergibt den Wert 67.

### Beispiel 34

In ein Rührgefäß werden 450 Teile Polyphosphorsäure, die 83,0 % P₂O₅ enthält, eingefüllt Danach werden 37,5 Teile 2,5-Dianilinoterephthalsäure und 112,5 Teile 2,5-Di-(4-toluidino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch in 5 Minuten in ein zweites Rührgefäß, welches 1431 Teilen Phosphorsäure 70 %ig enthält, eindosiert und unter Rühren bei 30 °C hydrolysiert. Dabei steigt die Temperatur auf 60 °C an. Nach der Hydrolyse liegt 80 %ige Phosphorsäure vor. Es wird auf 120 °C geheizt und 5 Stunden bei 120 °C gerührt. Danach wird auf 80 °C abgekühlt und 1440 Teile Wasser von 25°C zudosiert. Nach Wasserzugabe liegt 45 %ige Phosphorsäure vor. Dann werden 7,5 Teile Pigmentdispergator der Formel (II) zugegeben. In dieser Formel (II) bedeutet P den Rest des linearen, substituierten 2,9-Dimethylchinacridons und X die Gruppe der Formel (VI), worin R¹⁰, R¹¹, R¹² und R¹³ je ein Wasserstoffatom bedeutet und m die Zahl 3,5 ist. Es wird 1 Stunde bei 80°C gerührt. Danach wird die Pigmentzubereitung abgesaugt, mit Wasser neutral gewaschen und bei 80 °C getrocknet.

Man erhält 141,2 Teile Pigmentzubereitung.

19 Teile dieser Pigmentzubereitung werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.

Im AM-Lack werden transparente und farbstarke Lackierungen erhalten. Die Rheologie wird mit 3-4 bewertet, die Viskosität beträgt 4,0 s und die Glanzmessung ergab den Wert 71. Die Pigmentzubereitung ist nicht geflockt.

### Beispiel 35

In ein Rührgefäß werden 900 Teile Polyphosphorsäure, die 83,0 % P₂O₅ enthält, eingefüllt. Danach werden 60 Teile 2,5-Di-(4-chloranilino)-terephthalsäure unter Rühren bei 125 °C eingetragen und 3 Stunden auf 125 °C erhitzt, wobei der Ringschluß zum Chinacridon erfolgt. Anschließend wird das Reaktionsgemisch in 5 Minuten ein zweites Rührgefäß, welches 3820 Teilen Phosphorsäure 90 %ig enthält, eindosiert und unter Rühren bei 140 °C hydrolysiert. Dabei steigt die Temperatur auf 160 °C an. Nach der Hydrolyse liegt 95 %ige Phosphorsäure vor. Es wird 5 Stunden bei 160°C gerührt. Danach wird auf 90 °C abgekühlt, das Rohpigment abgesaugt und mit 95 %iger Schwefelsäure bis zum farblosen Ablauf gewaschen. Anschließend wird mit Wasser neutral gewaschen und bei 80°C getrocknet.

Man erhält 52,8 Teile Rohpigment (Mischung aus α- und γ-Phase).

In eine Rührwerkskugelmühle (Hersteller: Draiswerke GmbH, Mannheim), die mit 360 Teilen Zirkonmischoxiden vom Durchmesser 0,3 - 0,4 mm als Mahlkörper gefüllt ist, wird eine Suspension, bestehend aus 90 Teilen Wasser und 10 Teilen des Rohpigments (Mischung aus α- und γ-Phase), eingefüllt. Es wird mit einer Rührwerksumfangsgeschwindigkeit von 15,6 m/s sowie einer spezifischen Leistungsdichte von 3,1 kW pro Liter Mahlraum 10 Minuten lang bei 20°C gemahlen. Anschließend wird die Mahlgutsuspension von den Mahlkörpern abgesiebt, die Mahlkörper werden mit Wasser gespült und die vereinigten Mahlgutsuspensionen abgesaugt. Man erhält 40 Teile Präpigment Filterkuchen 25 %ig.

Zur Finishbehandlung wird der Filterkuchen in 120 Teile Natronlauge 1 %ig eingetragen. Danach werden 50 Teile Isobutanol 100 %ig zugegeben. Es wird zum Sieden erhitzt, 3 Stunden bei Siedetemperatur gerührt und anschließend das Isobutanol bis 100°C am Übergang abdestilliert. Nach dem Abkühlen auf 60°C wird das Pigment abgesaugt, mit Wasser neutral gewaschen und bei 80°C getrocknet. Man erhält 9,0 Teile Pigment (y-Phase). Im Kunststoff (PVC) werden transparente, reine und farbstarke Färbungen erhalten. Die Ausblutechtheit ist einwandfrei.

### Beispiel 36

In ein Rührgefäß werden 1000 Teile Polyphosphorsäure, die 85,0 % P₂O₅ enthält, eingefüllt. Danach werden 75 Teile 2,5-Di-(4-toluidino)-terephthalsäure und 60 Teile 2,5-Di-(4-chloranilino)-terephthalsäure unter Rühren bei 90 °C in 25 Minuten eingetragen. Dabei steigt die Temperatur auf 120°C an. Es wird auf 125 °C erhitzt und 1 Stunde bei 125 °C gerührt, wobei der Ringschluß zum Chinacridon erfolgt. Anschließend wird das Reaktionsgemisch in einem Statischen Mischer Typ Kenics KMR (Länge 10 cm, Durchmesser 9 mm, 8 Elemente, Lieferant: H. Ott, Neckargmünd) mit einem Durchsatz von 3,3 Volumenteilen pro Stunde in einen Volumenstrom von 27 Volumenteilen pro Stunde 70 %iger Phosphorsäure von 95°C eindosiert und in 0,9 Sekunden hydrolysiert (Bildung eines Niederschlags). Dabei steigt die Temperatur auf 118 °C an. Nach der Hydrolyse liegt 77,7 %ige Phosphorsäure vor. Man erhält 4905 Teile Rohpigmentsuspension. Nach dem Abkühlen auf 60°C wird die Rohpigmentsuspension abgesaugt, mit Wasser neutral gewaschen und bei 80°C getrocknet.

Man erhält 55,7 Teile Mischkristall-Rohpigment.

In eine Rührwerkskugelmühle (Hersteller: Draiswerke GmbH, Mannheim), die mit 360 Teilen Zirkonmischoxidperlen vom Durchmesser 0,3-0,4 mm als Mahlkörper gefüllt ist, wird eine Suspension, bestehend aus 80,9 Teilen Wasser, 4,5 Teilen Isobutanol 100 %ig, 4,6 Teilen Natronlauge 33 %ig und 10 Teilen Rohpigment, eingefüllt. Es wird mit einer Rührwerksumfangsgeschwindigkeit von 15,6 m/s sowie einer spezifischen Leistungsdichte von 3,1 kW pro Liter Mahlraum 15 Minuten lang bei 20 °C gemahlen. Anschließend wird die Mahlgutsuspension von den Mahlkörpem abgesiebt, die Mahlkörper werden mit Wasser abgespült und die vereinigten Mahlgutsuspensionen abgesaugt, mit Wasser neutral und isobutanolfrei gewaschen und bei 80°C getrocknet.

Man erhält 9,7 Teile Mischkristall-Pigment. Im AM-Lack werden transparente und farbstarke Lackierungen erhalten.

### Beispiel 37

In ein Rührgefäß werden 1000 Teile Polyphosphorsäure, die 85,0 % P₂O₅ enthält, eingefüllt. Danach werden 150 Teile 2,5-Di-(4-toluidino)-terephthalsäure und 50 Teile 2,5-Di-(3-chloranilino)-terephthalsäure unter Rühren bei 90 °C in 40 Minuten eingetragen. Dabei steigt die Temperatur auf 103°C an. Es wird auf 125 °C erhitzt und 1,5 Stunde bei 125 °C gerührt, wobei der Ringschluß zum Chinacridon erfolgt. Anschließend wird das Reaktionsgemisch in einem Zahnscheibendispergierer Typ IKA SD 41 (Lieferant: Janke und Kunkel, Staufen) bei 13000 UpM und 3 mm Statorschlitzweite mit einem Volumenstrom von 3,3 Volumenteilen pro Stunde in einen Volumenstrom von 23,5 Volumenteilen pro Stunde 70 %iger Phosphorsäure von 95°C eindosiert und in 4,3 Sekunden hydrolysiert (Bildung eines Niederschlags). Dabei steigt die Temperatur auf 102 °C an. Nach der Hydrolyse liegt 74,6 %ige Phosphorsäure vor. Man erhält 6815 Teile Mischkristall-Rohpigmentsuspension. 1315 Teile davon werden auf 130°C erhitzt und 5 Stunden bei 130°C gerührt. Danach wird auf 70°C abgekühlt und unter Rühren 1116 Teile Wasser von 25°C zulaufen lassen. Nach der Wasserzugabe liegt 40 %ige Phosphorsäure vor. Danach wird das Mischkristall-Pigment abgesaugt, mit Wasser neutral gewaschen und bei 80°C getrocknet.

Man erhält 24,5 Teile Mischkristall-Pigment. Im AM-Lack werden transparente, farbtiefe und farbstarke Lackierungen erhalten.

### Beispiel 38

In ein Rührgefäß werden 450 Teile Polyphosphorsäure, die 83,0 % P₂O₅ enthält, eingefüllt. Danach werden 37,5 Teile 2,5-Dianilinoterephthalsäure und 112,5 Teile 2,5-Di-(4-toluidino)-terephthalsäure unter Rühren bei 125°C eingetragen und 1 Stunde auf 125°C erhitzt, wobei der Ringschluß zum Chinacridon erfolgt. Anschließend wird das Reaktionsgemisch in 5 Minuten in ein zweites Rührgefäß, welches 1431 Teile Phosphorsäure 70 %ig enthält, eindosiert und unter Rühren bei 25°C hydrolysiert. Dabei steigt die Temperatur auf 60°C an. Nach der Hydrolyse liegt 80 %ige Phosphorsäure vor. Es wird auf 125°C erhitzt und 5 Stunden bei 125°C gerührt. Danach wird auf 90°C abgekühlt, 1900 Teile Wasser von 25°C zudosiert und 1 Stunde bei 90°C gerührt. Danach wird das Mischkristallpigment abgesaugt, mit Wasser neutral gewaschen und bei 80°C getrocknet.

Man erhält 133 Teile Mischkristallpigment. 19 Teile dieses Mischkristallpigments werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.

Man erhält eine Pigmentzubereitung. Im AM-Lack werden transparente und farbstarke Lackierungen erhalten. Die Rheologie wird mit 5 bewertet, die Viskosität beträgt 4,1 s und die Glanzmessung ergab den Wert 72. Das Pigment ist nicht geflockt.

## Patentansprüche

1. Verfahren zur Herstellung von Pigmenten, Mischkristallpigmenten und Pigmentzubereitungen auf Basis von linearen unsubstituierten oder substituierten Chinacridonen der allgemeinen Formel (I) 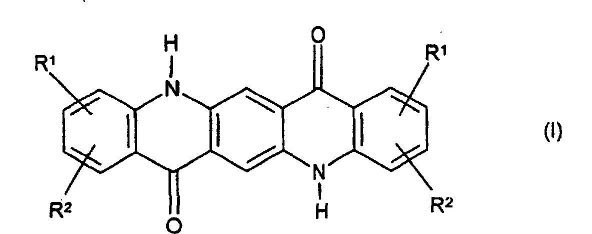 worin die Substituenten R¹ und R² gleich oder verschieden sind und Wasserstoff-, Chlor-, Brom- oder Fluoratome oder C₁-C₄-Alkyl, C₁-C₄-Alkoxy-, Carbonamidogruppen, die durch C₁-C₆-Alkylgruppen substituiert sein können; oder Phenoxy- oder C₆-C₁₀-Arylringe, an die noch weitere aromatische, aliphatische oder heterocyclische Ringe annelliert sein können, bedeuten,
durch Cyclisierung von Dianilinoterephthalsäure der Formel (la) 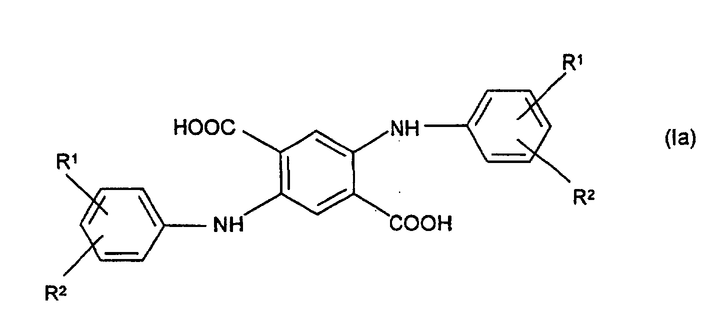 mit Polyphosphorsäure oder -ester, und anschließender Hydrolyse des Ringschlußgemisches aus Chinacridon und Polyphosphorsäure oder -ester, **dadurch gekennzeichnet, daß** das Ringschlußgemisch aus Chinacridon und Polyphosphorsäure oder -ester in eine solche Menge an Wasser oder wasserhaltige Orthophosphorsäure eindosiert wird, daß die Endkonzentration an Orthophosphorsäure in dem entstandenen Hydrolysegemisch gleich oder größer als 50 Gew.-% ist.

2. Verfahren nach Anspruch 1, **dadurch gekennzeichnet, daß** die Endkonzentration der Orthophosphorsäure zwischen 75 und 98 Gew.-% beträgt.

3. Verfahren nach Anspruch 1 oder 2, **dadurch gekennzeichnet, daß** zur Hydrolyse eine 50 bis 95 gew.-%ige, vorzugsweise 75 bis 90 gew.-%ige, wäßrige Orthophosphorsäure verwendet wird.

4. Verfahren nach mindestens einem der Ansprüche 1 bis 3, **dadurch gekennzeichnet, daß** die Dosierung so vorgenommen wird, daß der Konzentrationsgradient der Orthophosphorsäure im Hydrolysegemisch über 10 % pro Minute beträgt.

5. Verfahren nach mindestens einem der Ansprüche 1 bis 4, **dadurch gekennzeichnet, daß** man die Hydrolyse bei einer Temperatur zwischen dem Gefrierpunkt der wäßrigen Orthophosphorsäure oder des Wassers und 200°C, vorzugsweise bei 20 bis 150°C, durchführt.

6. Verfahren nach mindestens einem der Ansprüche 1 bis 5, **dadurch gekennzeichnet, daß** die Hydrolyse in einem statischen oder mechanischen Mischer vorgenommen wird.

7. Verfahren nach einem oder mehreren der Ansprüche 1 bis 6, **dadurch gekennzeichnet, daß** nach Beendigung der Dosierung das phosphorsaure Hydrolysegemisch einer Nachbehandlung bei Temperaturen von 20 bis 200°C, vorzugsweise 50 bis 175°C, unterzogen wird.

8. Verfahren nach einem oder mehreren der Ansprüche 1 bis 7, **dadurch gekennzeichnet, daß** nach der Hydrolyse eine Finishbehandlung in wäßrigem, wäßrig-organischem oder organischem Medium durchgeführt wird; oder daß nach der Hydrolyse eine Feinverteilung der entstandenen grobkristallinen Rohpigmente, vorzugsweise eine Trocken- oder Naßmahlung, und gegebenenfalls eine Finishbehandlung durchgeführt wird.

9. Verfahren gemäß einem oder mehreren der Ansprüche 1 bis 8, **dadurch gekennzeichnet, daß** man an einer beliebigen Stelle des Verfahrens organische Lösemittel, oberflächenaktive Mittel und/oder Pigmentdispergatoren zusetzt.

10. Verfahren gemäß Anspruch 8, **dadurch gekennzeichnet, daß** man die grobkristallinen Rohpigmente in einem flüssigen, wäßrigen, wäßrig-organischen oder organischen Medium auf einer Rührwerkskugelmühle mit einer Leistungsdichte von über 2,5 kW pro Liter Mahlraum und einer Rührwerksumfangsgeschwindigkeit von über 12 m/s unter der Einwirkung von Mahlkörpern vom Durchmesser kleiner als 1 mm bis zum gewünschten Feinverteilungsgrad naßvermahlt.

11. Verfahren gemäß einem oder mehreren der Ansprüche 8 bis 10, **dadurch gekennzeichnet, daß** die Finishbehandlung mit Alkanolen oder Carbonsäureamiden durchgeführt wird.

12. Verfahren gemäß einem oder mehreren der Ansprüche 8 bis 11, **dadurch gekennzeichnet, daß** man die Finishbehandlung bei Temperaturen von 50 bis 200 °C für 1 bis 24 Stunden durchführt.

13. Verfahren gemäß einem oder mehreren der Ansprüche 1 bis 12, **dadurch gekennzeichnet, daß** man zu einem beliebigen Zeitpunkt des Verfahrens einen oder mehrere Pigmentdispergatoren der allgemeinen Formel (II)
P―Xm (II)
zugibt, in der
P für einen m-wertigen Rest eines linearen Chinacridons der allgemeinen Formel (I) steht, in dem R¹ und R² gleich oder verschieden sind und Wasserstoffatome oder Methylgruppen darstellen,
X eine Gruppe der Formel (III)
-COOM (III)
oder eine Gruppe der Formel (IV)
-SO₃M (IV)
darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist; oder ein Ammoniumion mit der Struktur N⁺R³R⁴R⁵R⁶ ist, wobei die Substituenten R³, R⁴, R⁵ und R⁶ unabhängig voneinander jeweils Wasserstoffatome, C₁-C₃₀-Alkyl-, C₂-C₃₀-Alkenyl- oder C₅-C₃₀- Cycloalkylgruppen, die durch Hydroxy-, Di-(C₁-C₄- alkyl)amino-, Carboxy- oder Carboxamidgruppen substituiert sein können, bedeuten; oder eine Polyoxyalkylengruppe der Formel -(CHR¹⁴-CH₂O-)ₖ-H, in der R¹⁴ für Wasserstoff oder C₁-C₄-Alkyl steht und k eine Zahl von 1 bis 30 ist; oder
X eine Gruppe der Formel (V) 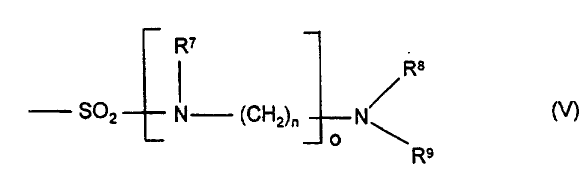 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6 und o die Zahl 0 oder 1; oder
X eine Gruppe der Formel (VI) 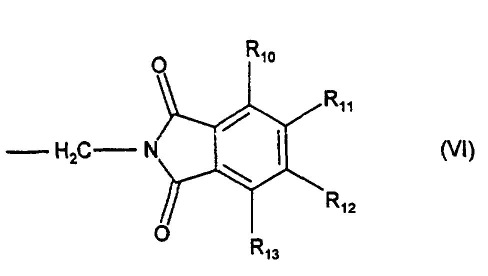 darstellt, wobei R¹⁰, R¹² und R¹³ ein Wasserstoff-, Fluor-, Chlor- oder Bromatom und R¹¹ ein Wasserstoff-, Fluor, Chlor- oder Bromatom ist oder eine Nitro-, C₁-C₅-Alkyl-, C₁-C₆-Alkoxy- oder Benzoylaminogruppe bedeutet;
und m eine Zahl von 1 bis 4 ist.

14. Verfahren gemäß Anspruch 13, **dadurch gekennzeichnet, daß** man pro Gewichtseinheit Chinacridon zwischen 0,1 und 20 Gew.-%, vorzugsweise 3 bis 10 Gew.-%, Pigmentdispergator zugibt.

## Claims

1. A process for preparing pigments, mixed-crystal pigments and pigment preparations on the basis of linear unsubstituted or substituted quinacridones of the formula (I) 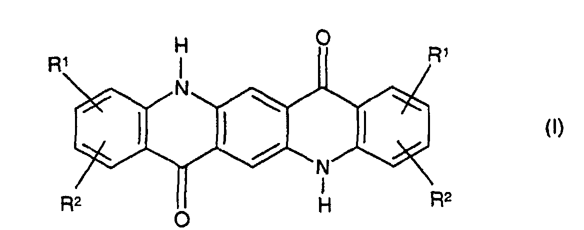 in which the substituents R¹ and R² are identical or different and are hydrogen, chlorine, bromine or fluorine atoms or C₁-C₄-alkyl, C₁-C₄-alkoxy or carboxamido groups, which can be substituted by C₁-C₆-alkyl groups; or are phenoxy rings or C₆-C₁₀-aryl rings onto which further aromatic, aliphatic or heterocyclic rings can be fused,
by cyclizing dianilinoterephthalic acid of the formula (Ia) 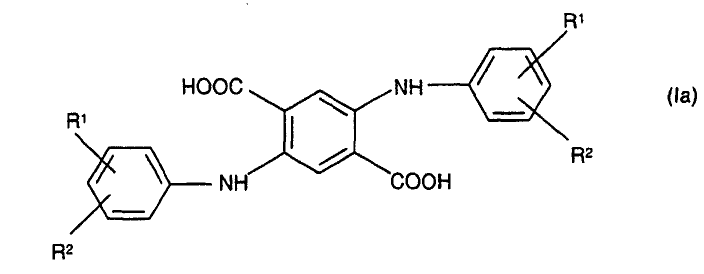 with polyphosphoric acid or polyphosphoric ester and subsequently hydrolyzing the ring closure mixture comprising quinacridone and polyphosphoric acid or polyphosphoric ester, which comprises metering the ring closure mixture comprising quinacridone and polyphosphoric acid or polyphosphoric ester into an amount of water or aqueous orthophosphoric acid which is such that the final orthophosphoric acid concentration in the resultant hydrolysis mixture is greater than or equal to 50% by weight.

2. The process as claimed in claim 1, wherein the final orthophosphoric acid concentration is between 75 and 98% by weight.

3. The process as claimed in claim 1 or 2, wherein hydrolysis is carried out using an aqueous orthophosphoric acid with a concentration of from 50 to 95% by weight, preferably from 75 to 90% by weight.

4. The process as claimed in at least one of claims 1 to 3, wherein the metered addition is made such that the concentration gradient of the orthophosphoric acid in the hydrolysis mixture is more than 10% per minute.

5. The process as claimed in at least one of claims 1 to 4, wherein the hydrolysis is conducted at a temperature between the freezing point of the aqueous orthophosphoric acid or of the water and 200°C, preferably at from 20 to 150°C.

6. The process as claimed in at least one of claims 1 to 5, wherein the hydrolysis is performed in a static or mechanical mixer.

7. The process as claimed in one or more of claims 1 to 6, wherein after the end of the metered addition the hydrolysis mixture, containing phosphoric acid, is subjected to an aftertreatment at temperatures from 20 to 200°C, preferably from 50 to 175°C.

8. The process as claimed in one or more of claims 1 to 7, wherein following the hydrolysis a finish treatment is carried out in an aqueous, aqueous-organic or organic medium; or wherein following the hydrolysis a fine division of the resultant coarsely crystalline crude pigments, preferably a dry or wet grinding and, if desired, a finish treatment is carried out.

9. The process as claimed in one or more of claims 1 to 8, wherein organic solvents, surface-active agents and/or pigment dispersants are added at any desired point in the process.

10. The process as claimed in claim 8, wherein the coarsely crystalline crude pigments are wet-ground to the desired degree of fine division in a liquid, aqueous, aqueous-organic or organic medium on a ball mill having a power density of more than 2.5 kW per liter of milling space and at a stirrer tip speed of more than 12 m/s under the action of grinding media whose diameter is less than 1 mm.

11. The process as claimed in one or more of claims 8 to 10, wherein the finish treatment is carried out with alkanols or carboxamides.

12. The process as claimed in one or more of claims 8 to 11, wherein the finish treatment is carried out at temperatures of 50 to 200°C for from 1 to 24 hours.

13. The process as claimed in one or more of claims 1 to 12, wherein at any desired point in time in the process one or more pigment dispersants of the formula (II)
P - Xm (II)
is/are added, in which
P is an m-valent radical of a linear quinacridone of the formula (I), in which R¹ and R² are identical or different and are hydrogen atoms or methyl groups,
X is a group of the formula (III)
-COOM (III)
or a group of the formula (IV)
-SO₃M (IV)
in which
M is the hydrogen ion H⁺ or the equivalent M^{r+}/r of an r-valent metal cation, where r, for the case in question, is accordingly one of the numbers 1, 2 and 3; or defines an ammonium ion having the structure N⁺R³R⁴R⁵R⁶, where the substituents R³, R⁴, R⁵ and R⁶ are independent of one another and are each hydrogen atoms, C₁-C₃₀-alkyl, C₂-C₃₀-alkenyl or C₅-C₃₀-cycloalkyl groups which can be substituted by hydroxyl, di(C₁-C₄-alkyl)amino, carboxyl or carboxamido groups; or can be a polyoxyalkylene group of the formula -(CHR¹⁴-CH₂-O-)ₖ-H, in which R¹⁴ is hydrogen or C₁-C₄-alkyl and k is a number from 1 to 30; or
X is a group of the formula (V) 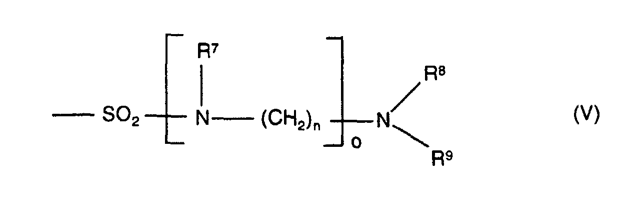 in which R⁸ and R⁹ independently of one another are each a hydrogen atom, a C₁-C₂₀-alkyl, C₂-C₂₀-alkenyl or C₅-C₇-cycloalkyl group, or in which R⁸ and R⁹, together with the adjacent nitrogen atom, form an aliphatic or aromatic, five- or six-membered heterocyclic system having in each case 1 to 3 ring members comprising identical or different heteroatoms from the series consisting of nitrogen, oxygen and sulfur, R⁷ is a hydrogen atom or a C₁-C₄-alkyl group, n is a number from 1 to 6, and o is 0 or 1; or
X is a group of the formula (VI) 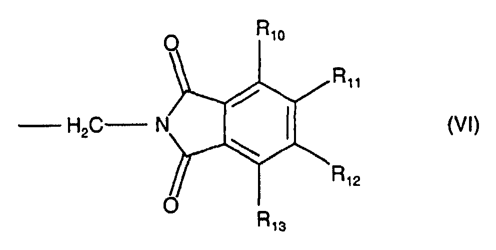 in which R¹⁰, R¹² and R¹³ are a hydrogen, fluorine, chlorine or bromine atom and R¹¹ is a hydrogen, fluorine, chlorine or bromine atom or a nitro, C₁-C₅-alkyl, C₁-C₆-alkoxy or benzoylamino group;
and
m is a number from 1 to 4.

14. The process as claimed in claim 13, wherein between 0.1 and 20% by weight, preferably from 3 to 10% by weight, of pigment dispersant is added per unit weight of quinacridone.

## Revendications

1. Procédé pour la préparation de pigments, de pigments à cristaux mixtes et de compositions pigmentaires à base de quinacridones non substituées ou substituées de formule générale (I) 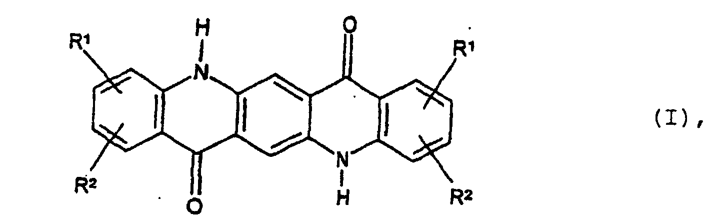 où les substituants R¹ et R² sont identiques ou différents et représentent des atomes d'hydrogène, de chlore, de brome ou de fluor ou des groupes alkyle en C₁-C₄, alkoxy en C₁-C₄, carboxamido, qui peuvent être substitués par des groupes alkyle en C₁-C₆ ; ou représentent des cycles phénoxy ou aryle en C₆-C₁₀, sur lesquels peuvent être condensés d'autres cycles aromatiques, aliphatiques ou hétérocycliques,
par cyclisation d'acide dianilinotéréphtalique de formule (Ia) 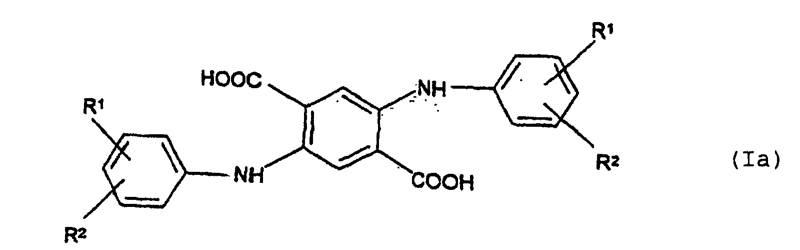 avec un acide polyphosphorique ou son ester, et par hydrolyse ultérieure du mélange de cyclisation de quinacridone ou d'acide polyphosphorique ou de ses esters, **caractérisé en ce que** le mélange de cylcisation de quinacridone et d'acide polyphosphorique ou de ses esters en ajoutant progressivement une quantité d'eau ou d'acide orthophosphorique contenant de l'eau telle que la concentration finale en acide orthphopsphorique dans le mélage d'hydrolyse obtenu soit égale ou supérieure à 50 % en masse.

2. Procédé selon la revendication 1, **caractérisé en ce que** la concentration finale en acide orthophosphorique est comprise entre 75 et 98 % en masse.

3. Procédé selon la revendication 1 ou 2, **caractérisé en ce qu'**on utilise pour l'hydrolyse un acide orthophosphorique aqueux ayant une concentration de 50 à 95 % en masse, de préférence de 75 à 90 % en masse.

4. Procédé selon au moins une des revendications 1 à 3, **caractérisé en ce qu'**on effectue le dosage de façon telle que le grandient de concentration de l'acide orthophosphorique dans le mélange d'hydrolyse soit supérieur à 10 % par minute.

5. Procédé selon au moins l'une des revendications 1 à 4, **caractérisé en ce qu'**on met en oeuvre l'hydrolyse à une température comprise entre le point de congélation de l'acide orthophosphorique aqueux ou de l'eau et 200°C, de préférence à une température de 20 à 150°C.

6. Procédé selon au moins une des revendications 1 à 5, **caractérisé en ce qu'**on met en oeuvre l'hydrolyse dans un mélangeur statique ou mécanique.

7. Procédé selon une ou plusieurs des revendications 1 à 6, **caractérisé en ce que** après avoir terminé le dosage, on soumet le mélange d'hydrolyse d'acide phosphorique à un post-traitement à une température de 20 à 200°C, de préférence de 50 à 175°C.

8. Procédé selon une ou plusieurs des revendications 1 à 7, **caractérisé en ce qu'**on met en oeuvre, après l'hydrolyse, un traitement de finition en milieu aqueux-organique ou organique ; ou **en ce qu'**on met en oeuvre, après l'hydrolyse, une division fine des pigments bruts obtenus, de préférence un broyage par voie sèche ou voie humide, et éventuellement un traitment de finition.

9. Procédé selon une ou plusieurs des revendications 1 à 8, **caractérisé en ce qu'**on ajoute à n'importe quel stade du procédé, des solvants organiques, des agents de surface et/ou agents dispersant des pigments.

10. Procédé selon la revendication 8, **caractérisé en ce qu'**on broie par voie humide les pigments bruts à cristaux grossiers dans un milieu liquide, aqueux, aqueux-organique ou organique sur un broyeur à boulets ayant une puissance volumique supérieue à 2,5 kW par litre d'espace de broyage et une vitesse de broyage périphérique supérieure à 12 m/s, sous l'effet de corps broyants ayant un diamètre inférieur à 1 mm jusqu'à l'obtention de la finesse de mouture voulue.

11. Procédé selon une ou plusieurs des revendications 8 à 10, **caractérisé en ce qu'**on met en oeuvre le traitement de finition avec des alcanols ou des amides d'acides carboxyliques.

12. Procédé selon une ou plusieurs des revendications 8 à 11, **caractérisé en ce qu'**on met en oeuvre le traitement de finition à une température de 50 à 200°C pendant 1 à 24 heures.

13. Procédé selon une ou plusieurs des revendications 1 à 12, **caractérisé en ce qu'**on ajoute à n'importe quel moment du procédé un ou plusieurs dispersants de pigments de formule générale
P-Xm (II)
dans laquelle
P représente un reste m-valent d'une quinacridone linéaire de formule générale (I), dans laquelle R¹ et R² sont identiques ou différents et représentent des atomes d'hydrogène ou des groupes méthyle,
X représente un groupe de formule (III)
-COOM (III)
ou un groupe de formule (IV)
-SO₃M (IV)
où
M représente l'ion hydrogène H⁺ ou l'équivalent M^{r+}/r d'un cation métallique r-valent, r représentant pour le cas concerné conformément un des nombres 1, 2 ou 3 ; ou un ion ammonium ayant la structure N⁺R³R⁴R⁵R⁶, où les substituants R³, R⁴, R⁵ et R⁶ représentent chacun, indépendamment l'un de l'autre, des atomes d'hydrogène, des groupes alkyle en C₁-C₃₀, alcényle en C₂-C₃₀ ou cycloalkyle en C₅-C₃₀, qui peuvent être substitués par des substituants hydroxy, di-(alkyl en C₁-C₄)amino, carboxy ou carboxamido ; ou représentent un groupe polyoxyalkylène de formule -(CHR¹⁴-CH₂O-)ₖ-H, dans laquelle R¹⁴ représente un atome d'hydrogène ou un groupe alkyle en C₁-C₄ et k est un nombre de 1 à 30 ; ou
X représente un groupe de -formule (V) 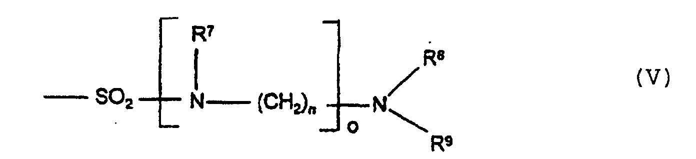 où R⁸ et R⁹ représentent chacun, indépendmment l'un de l'autre, un atome d'hydrogène, un groupe alkyle en C₁-C₂₀, un groupe alcényle en C₂-C₂₀ ou un groupe cycloalkyle en C₅-C₇, ou R⁸ et R⁹ forment ensemble avec l'atome d'azote limitrophe, un système hétérocyclique aliphatique ou aromatique, de 5 ou 6 chaînons, ayant chacun 1 à 3 hétéroatomes nucléaires identiques ou différents de la série des atomes d'azote, d'oxygène ou du soufre, R⁷ représente un atome d'hydrogène ou un groupe alkyle en C₁-C₄, n est un nombre qui va de 1 à 6 et o est un nombre qui vaut 0 ou 1 ; ou
X représente un groupe de formule (VI) 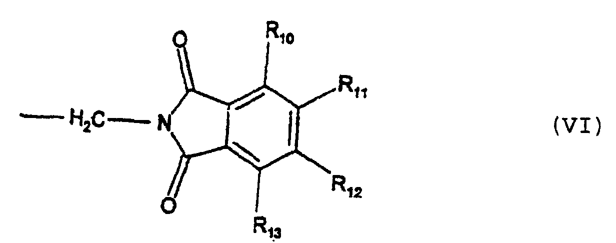
où R¹⁰, R¹² et R¹³ représentent un atome d'hydrogène, de fluor, de chlore ou de brome et R¹¹ représente un atome d'hydrogène, de fluor, de chlore ou de brome ou un groupe nitro, alkyle en C₁-C₅, alkoxy en C₁-C₆ ou benzoylamino ;
et m est un nombre qui va de 1 à 4.

14. Procédé selon la revendication 13, **caractérisé en ce qu'**on ajoute par unité de poids de quinacridone une quantité de dispersant de pigment comprise entre 0,1 et 20 % en masse, de préférence de 3 à 10 % en masse.
